(19) Europäisches Patentamt
European Patent Office
Office européen des brevets

(11) EP 2 998 333 B1

(12) # EUROPÄISCHE PATENTSCHRIFT

(45) Veröffentlichungstag und Bekanntmachung des Hinweises auf die Patenterteilung:
**05.10.2022 Patentblatt 2022/40**

(21) Anmeldenummer: **15181328.4**

(22) Anmeldetag: **18.08.2015**

(51) Internationale Patentklassifikation (IPC):
***C08G 18/48*** *(2006.01)* ***C08G 18/76*** *(2006.01)*
***C08G 18/20*** *(2006.01)* ***C08G 18/24*** *(2006.01)*
***C08G 18/28*** *(2006.01)* ***C08G 77/46*** *(2006.01)*
***C08G 77/50*** *(2006.01)* ***C08L 83/12*** *(2006.01)*
***C08L 83/14*** *(2006.01)*

(52) Gemeinsame Patentklassifikation (CPC):
**C08G 18/2063; C08G 18/244; C08G 18/2825; C08G 18/4841; C08G 18/7621; C08G 18/7664; C08G 77/46; C08G 77/50; C08J 9/0061;**
C08J 2201/022; C08J 2205/06; C08J 2375/08; C08J 2483/12

(54) **HERSTELLUNG VON VISKOELASTISCHEN POLYURETHANSYSTEMEN UNTER EINSATZ VON BLOCKPOLYMEREN MIT VERKNÜPFTEN SILOXANBLÖCKEN ALS ZELLÖFFNER**

PRODUCTION OF VISCOELASTIC POLYURETHANE SYSTEMS USING BLOCK POLYMERS HAVING LINKED SILOXANE BLOCKS AS CELL-OPENING AGENTS

FABRICATION DE SYSTEMES POLYURETHANES VISCOELASTIQUES FAISANT APPEL A DES POLYMERES SEQUENCES DOTES DE SEQUENCES DE SILOXANE RETICULEES EN TANT QU'AGENT D'OUVERTURE D'ALVEOLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.09.2014 DE 102014218635**

(43) Veröffentlichungstag der Anmeldung:
**23.03.2016 Patentblatt 2016/12**

(73) Patentinhaber: **Evonik Operations GmbH**
**45128 Essen (DE)**

(72) Erfinder:
- **KREBS, Michael**
  **40219 Düsseldorf (DE)**
- **HUBEL, Roland**
  **45136 Essen (DE)**
- **FERENZ, Michael**
  **45147 Essen (DE)**
- **WOLF, Marco**
  **46487 Wesel (DE)**
- **GÜNTHER, Thomas**
  **41464 Neuss (DE)**

(74) Vertreter: **Evonik Patent Association**
**c/o Evonik Industries AG**
**IP Management**
**Bau 1042A/PB 15**
**Paul-Baumann-Straße 1**
**45772 Marl (DE)**

(56) Entgegenhaltungen:
**US-B1- 6 730 749**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 998 333 B1

## Beschreibung

Die vorliegende Erfindung liegt auf dem Gebiet der Polyurethane sowie auf dem Gebiet der Siloxane. Sie betrifft viskoelastische Polyurethanschäume und ein Verfahren zur Herstellung solcher Polyurethansschäume unter Einsatz bestimmter verknüpfter Siloxan-Blockpolymere.

Polyurethane unterschiedlicher Art werden üblicherweise durch die Polymerisation von Diisocyanaten, wie z. B. 4,4'-Methylenbis(phenylisocyanat), kurz MDI, oder 2,4-Toluylendiisocyanat, kurz TDI, mit Polyether-Polyolen oder Polyester-Polyolen hergestellt. Polyether-Polyole können z.B. durch Alkoxylierung von polyhydroxyfunktionellen Startern gefertigt werden. Geläufige Starter sind z. B. Glykole, Glycerin, Trimethylolpropan, Pentaerythrit, Sorbit oder Saccharose. Bei der Herstellung von Polyurethaschäumen, einem der besonders wichtigen Polyurethansysteme, kommen üblicherweise zusätzliche Treibmittel zum Einsatz, wie z.B. Pentan, Methylenchlorid, Aceton oder Kohlenstoffdioxid. Als chemisches Treibmittel wird meist Wasser eingesetzt, welches unter Abspaltung von Kohlendioxid mit Isocyanat zu einem Polyharnstoff reagiert. Üblicherweise werden zur Stabilisierung des Polyurethanschaums oberflächenaktive Substanzen, insbesondere Silikontenside eingesetzt. Polyurethanschaumstoffe bzw. -schäume finden aufgrund ihrer hervorragenden mechanischen und physikalischen Eigenschaften in den verschiedensten Bereichen Verwendung. Einen besonders wichtigen Markt für verschiedenste Typen von PUR-Schäumen (=Polyurethanschäumen), wie konventionelle Weichschäume auf Ether- und Esterpolyolbasis, Kaltschäume (häufig auch als HR-Schäume bezeichnet), Hartschäume, Integralschäume und mikrozellulare Schäume, sowie Schäume deren Eigenschaften zwischen diesen Klassifizierungen liegen, wie z. B. halbharte Systeme, stellt die Automobil- und die Möbelindustrie dar.

Eine spezielle Klasse der Polyurethanschaumstoffe ist die der viskoelastischen Schaumstoffe. Diese sind auch unter dem Namen Memory Foam (zu Deutsch etwa "Schaum mit Erinnerungsvermögen") bekannt und zeichnen sich sowohl durch eine geringe Rückprallelastizität (vorzugsweise < 10%, wohingegen die Rückprallelastizität von konventionellen PUR-Weichschäumen bei 35 - 45% liegt) als auch durch eine langsame, graduelle Rückverformung nach einer erfolgten Kompression aus (Rückverformungszeit vorzugsweise 2 - 10 s). Solche Materialien sind im Stand der Technik wohlbekannt und werden wegen ihrer energie- und schallabsorbierenden Eigenschaften sehr geschätzt.

Viskoelastische Schaumstoffmaterialien finden sich in einer Vielzahl von Anwendungsbereichen zur Polsterung (wie zum Beispiel in Kissen, Sitzbezügen, Matratzen usw.), als Schall- und/oder Vibrations-dämpfende Materialien oder auch als Aufprallschutz. Typische viskoelastische Schaumstoffe haben eine geringere Porosität und eine hohe Dichte verglichen mit Standardetherpolyurethanweichschäumen. Kissen liegen mit einem Raumgewicht von gewöhnlich 30 - 50 kg/m$^3$ am unteren Ende der für viskoelastische Schaumstoffe typischen Dichteskala, wohingegen Matratzen oft eine Dichte im Bereich von 60 - 130 kg/m$^3$ aufweisen.

Unter den viskoelastischen Schaumstoffmaterialien besitzen solche aus Polyurethanen die größte Bedeutung. Dies liegt zum einen daran, dass sich durch die Wahl der verwendeten Polyol- beziehungsweise Isocyanatkomponenten und gegebenenfalls weiterer Hilfsstoffe die physikalischen Eigenschaften des zu erhaltenden Polyurethanschaumstoffes sehr genau einstellen lassen, zum anderen aber auch daran, dass sich durch die "in situ"-Herstellung (gegebenenfalls vor Ort) Schaumstoffmaterialien nahezu beliebiger und sehr komplexer Form und Struktur herstellen lassen.

Die Mehrzahl der konventionellen Polyurethanschaumstoffe stellen Blockcopolymere dar, welche räumlich getrennte Bereiche verschiedener Phasen mit hohen und niedrigen Glasübergangstemperaturen (TG) aufweisen. Die Glasübergangstemperatur trennt dabei den unterhalb von ihr liegenden spröden energieelastischen Bereich (= Glasbereich) von dem oberhalb von ihr liegenden weichen entropieelastischen Bereich (= gummielastischer Bereich). Diese hohen und niedrigen Glasübergangstemperaturen verschiedener Phasen innerhalb des Polymers grenzen normalerweise den Temperaturbereich ein, innerhalb dessen man das besagte Material verwenden kann. Die DMA-("dynamic mechanical analysis") Spektren solcher Materialien zeichnen sich üblicherweise durch einen relativ flachen Bereich ("modulus plateau") zwischen den verschiedenen Glasübergängen aus.

Die Phase geringer Glasübergangstemperatur in diesen Materialien leitet sich üblicherweise (obwohl nicht immer) von einem "Block" geringer Glasübergangstemperatur ab, welcher vorgeformt wird und anschließend erst der Polymerisation unterworfen wird. Die Phase hoher Glasübergangstemperatur bildet sich demgegenüber normalerweise erst während der Polymerisation, bedingt durch die dann erfolgende Ausbildung der Urethaneinheiten. Der Block geringer Glasübergangstemperatur (oft auch als "Weichblock" bezeichnet) leitet sich üblicherweise von einer Flüssigkeit oder von einem oligomeren Harz geringer Schmelztemperatur ab, welche eine Vielzahl von gegenüber Isocyanateinheiten reaktiven Gruppen enthalten. Polyether- und Polyesterpolyole sind Beispiele solcher oligomeren Harze. In konventionellen Polyurethanen ordnen sich die harten (hohe Glasübergangstemperatur) und weichen (geringe Glasübergangstemperatur) Phasen während der Polymerisation zueinander an und trennen sich anschließend spontan voneinander, um voneinander morphologisch verschiedene Phasen innerhalb des "Bulkpolymers" auszubilden. Bei solchen Materialien spricht man entsprechend auch von "phasenseparierten" Materialien. Viskoelastische Polyurethane stellen in diesem Zusammenhang einen Spezialfall dar, bei welchen die oben beschriebene Phasentrennung nur unvollständig oder überhaupt nicht auftritt. Die Glastemperatur liegt bei viskoelastischen Schaumstoffen vorzugsweise zwischen -20 und +15 °C, die Glasübergangstemperatur von Standard-Polyurethan-Weichschäumen dagegen regelmäßig bei unter -35°C.

Von einer solchen "Struktur-Viskoelastizität" bei Polyurethanschäumen mit (überwiegend) offenen Zellen zu unterscheiden ist eine solche Viskoelastizität, die auf einen pneumatischen Effekt zurückzuführen ist. In letzterem Falle befinden sich nämlich nahezu geschlossene Zellen innerhalb des Schaumstoffmaterials, also Zellen mit nur einer geringen Öffnung. Durch die geringe Größe der Öffnungen strömt die Luft nach einer Kompression nur langsam wieder ein, was eine verlangsamte Rückverformung zur Folge hat. Beispiele für solche auf einem pneumatischen Effekt beruhenden viskoelastischen Schaumstoffe sind die im Handel erhältlichen Produkte Cosypur® und Elastoflex® der BASF Polyurethanes GmbH.

Generell sind viskoelastische Polyurethanschaumstoffe schwieriger in kommerziellem Maße herzustellen als herkömmlich PUR Weichschäume. Die Verschäumung selbst und die Aushärtung des erhaltenen Schaumstoffs sind sehr empfindlich gegenüber Störungen. Kleine Schwankungen in der Zusammensetzung (beispielsweise bei Schwankungen in Katalysatorbeladung) oder in der Prozessführung können schnell zu Ausschussware führen. Die Menge an Wasser ist bei der Herstellung von viskoelastischen PUR-Schaumstoffen mit typischerweise unter 3 pphp (Teile pro hundert Teile Polyol) geringer als bei herkömmlichen PUR-Weichschäumen. Diese Tatsache in Kombination mit der Verwendung von speziellen Polyolen erschwert die Produktion viskoelastischer PUR-Schaumstoffe sehr deutlich.

In Formulierungen zur Herstellung von viskoelastischen PUR-Schäumen gibt es relativ zur Menge an Wassermolekülen weit mehr Polyolhydroxylgruppen, welche für eine Reaktion mit Isocyanatgruppen zur Verfügung stehen als in Formulierung zur Herstellung konventioneller PUR-Weichschäume. Die erhöhte Konkurrenz zwischen Polyol- und Wassermolekülen verlangsamt die Treibreaktion und somit das Entstehen von $CO_2$. Dadurch wird außerdem die Kettenverlängerung basierend auf der Ausbildung von Harnstoffsegmenten verlangsamt. Die daraus resultierenden Veränderungen in der Treib- und Gelreaktion führen häufig zu instabilen Strukturen im Schaum oder zu Kollapsen.

Zur Synthese von Polyurethanschäumen mit Struktur-Viskoelastizität sind im Stand der Technik schon viele Verfahren beschrieben worden, deren gemeinsames Merkmal meistens die Verwendung einer speziellen Polyol-Zusammensetzung neben einer mehr oder weniger frei wählbaren Isocyanatkomponente ist. So werden die viskoelastischen Eigenschaften, welche aus einer Anhebung der Glastemperatur auf Raumtemperatur resultieren, dabei häufig durch eine Kombination verschiedener Maßnahmen während des Verschäumungsprozesses erhalten. Meist besteht diese spezielle Polyolmischung aus verschiedenen Polyolen. Oft werden auch Weichmacher verwendet.

Neben den oben beschriebenen Problemen bei der Produktion von viskoelastischen PUR-Schaumstoffen ist es allgemein bekannt, dass die Zellöffnung bei der Herstellung solcher Schaumstoffe einen besonders kritischen Schritt darstellt. Besonders bei Verwendung von TDI T80 als Isocyanatkomponente kommt es infolge von unzureichender Zellöffnung häufig zu starkem Schrumpf, was wiederum die Prozessführung erschwert.

Des Weiteren geht ein allgemeiner Trend zu höheren Schaumdichten. Dies wird erreicht durch den Einsatz von MDI/TDI Mischungen oder den Einsatz von MDI als einziger Isocyanatquelle. Höhere Dichten erfordern allerdings einen geringeren Wasseranteil und somit einen geringeren Anteil an chemischem Treibmittel in der Schaumformulierung. Die Reduktion an Wasser resultiert in einer geringeren Menge an gebildetem Harnstoff, wodurch wiederum ein Schaumstoff mit geringerer Porosität resultiert. Um diese Geschlossenheit der Zellen auszugleichen, werden oft hohe Mengen an Zellöffner in solchen Formulierungen eingesetzt (beispielsweise oft mehr als 3 Teile pro hundert Teile Polyol (pphp)). Hohe Mengen an Zellöffnern haben allerdings häufig negative Auswirkungen auf die Zellstruktur und die mechanischen Eigenschaften (Zugfestigkeit, Druckverformung, Ausdehnung, etc.) des Schaumstoffs.

Die in WO 2007/146351 beschriebenen Polyalkylenoxidzellöffner sind zwar auch bei kleinen Einsatzmengen sehr effektiv und in verschiedenen Schaumdichten und Formulierungen (TDI, MDI oder Mischungen daraus) einsetzbar, jedoch muss für eine feine Zellstruktur die Menge an Silikonstabilisator erheblich erhöht werden.

Zur Öffnung von geschlossenen Zellen in Polyurethan-Weichschaumstoffen sind im Stand der Technik verschiedene weitere Möglichkeiten bekannt.

So ist es möglich, die Zellen in Polyurethan-Weichschäumen auf mechanischem Weg durch Walken der entsprechenden Formteile nach der Entformung zu öffnen. Dieses Verfahren ist weit verbreitet, allerdings sowohl zeit- als auch energieaufwendig und nur bei der Herstellung von Formteilen anwendbar.

Weiterhin kann die Offenzelligkeit von viskoelastischen Polyurethanschaumstoffen dadurch verbessert werden, dass als Verbindungen mit mindestens zwei mit Isocyanatgruppen reaktiven Wasserstoffatomen Gemische aus mindestens einem Polyetheralkohol mit einem hohen Gehalt an Ethylenoxid, vorzugsweise mindestens 50 Gew.-%, und mindestens einem mit diesen Polyetheralkoholen unverträglichen Polyetheralkohol mit einem hohen Gehalt am Propylenoxid, vorzugsweise mindestens 90 Gew.-%, eingesetzt werden. So beschreibt US 2004/0254256 viskoelastische Schaumstoffe, bei deren Herstellung die Polyolkomponente 30 bis 70 Gew.-Teile eines Polyetheralkohols mit einem hohen Anteil von Ethylenoxideinheiten in der Polyetherkette enthält. EP 1 240 228 beschreibt die Herstellung von viskoelastischen Schaumstoffen unter Verwendung von Polyetheralkoholen, die einen Gehalt an Ethylenoxid in der Polyetherkette von mindestens 50 Gew.-% und eine Hydroxylzahl im Bereich zwischen 40 und 50 mg KOH/g aufweisen. Durch den Einsatz der ethylenoxidreichen Polyetheralkohole wird die Offenzelligkeit der Schaumstoffe zwar erhöht, nachteilig an der Verwendung von Polyetheralkholen mit einem hohen Anteil an Ethylenoxid in der Kette ist jedoch die Erhöhung der Hydrophilie der Schaumstoffe. Dadurch quellen diese Schäume bis zu 40 Vol % im Kontakt mit Wasser

auf. Dieses Quellverhalten ist insbesondere für Anwendungen in feuchten Umgebungen inakzeptabel.

Als Zellöffner kommen im Stand der Technik weiterhin verschiedenartige Additive zum Einsatz. So werden zum Öffnen von Polyurethanschaumstoffen häufig Feststoffpartikel eingesetzt. Beispielsweise ist $CaCO_3$ ein gängiger Füllstoff in der PU-Industrie. Jedoch sind die zellöffnenden Eigenschaften von Kalziumcarbonat für viskoelastische Anwendungen meist zu gering. Es werden sehr große Mengen benötigt und auch beim Einsatz von 15 pphp kommt es häufig dennoch zum Schrumpf der viskoelastischen PUR-Schaumstoffe. Diese hohen Einsatzmengen führen dann darüber hinaus noch zu veränderter Zellstruktur und veränderten mechanischen Eigenschaften.

Eine gängige Methode zum Öffnen der Zellen wassergetriebener Polyurethanschäume ist der Einsatz von inkompatiblen Flüssigkeiten, sogenannten Entschäumern. Diese sind nicht mischbar mit der Polyol/Isocyanat-Reaktionsmischung, können jedoch an der Phasengrenzfläche Einfluss auf die Silikonstabilisatoren in der Reaktionsmischung nehmen und so die Zellöffnung erleichtern. Typischerweise werden hierfür Dimethylsiloxane (Silikonöle) eingesetzt. Ein bekanntes Problem beim Einsatz von Silikonölen ist, dass sie die Zellöffnung in einem sehr frühen Stadium der Schaumbildung vorantreiben und damit den Schaum destabilisieren. Ein weiterer Nachteil des Einsatzes von Silikonölen als Zellöffner ist das sehr enge Verarbeitungsspiel und die meist sehr grobe Zellstruktur der erhaltenen Schaumstoffe. Weiterhin können auch Mineralöle als inkompatible Flüssigkeiten eingesetzt werden. Diese sind zwar effektive Zellöffner, führen aber zu einer öligen Oberfläche und somit zu einer ungewünschten haptischen Wahrnehmung der Schaumstoffe. Es gibt jedoch auch inkompatible Flüssigkeiten, welche durchaus als Zellöffner in Frage kommen. Ein häufig auftretendes Problem bei als Zellöffnern eingesetzten inkompatiblen Flüssigkeiten ist der unangenehme Geruch und das schlechte Emissionsverhalten, beispielsweise ermittelt entsprechend dem Prüfkammerverfahren in Anlehnung an die DIN-Norm DIN EN ISO 16000-9:2008-04, 24 Stunden nach Prüfkammerbeladung, wie unter anderem im Beispielteil detailliert erläutert.

Ein weiterer Ansatz ist die Verwendung von linearen Blockcopolymeren bestehend aus Polydimethylsiloxanblöcken und Polyetherblöcken $[(\text{Polyether})(\text{Polydimethylsiloxan})]_n$ wie sie in den Patenschriften US 3 836 560 oder DE 10 2006 061 351 A1 beschrieben sind. Diese $(AB)_n$ Strukuren sind in der Lage den Schaum in der Entstehungsphase zu stabilisieren, indem sie die Koaleszenz der Gasbläschen verhindern. Am Ende der schaumbildenden Reaktion erleichtern sie dann die Zellöffnung. Unterhalb von 30000 g/mol ist die stabilisierende Wirkung der $(AB)_n$ Copolymere nur zu einem geringen Teil gegeben, weshalb die mindeste durchschnittliche Molmasse typischerweise bei 30000 g/mol, vorzugsweise zwischen 65000 g/mol und 100000 g/mol liegt. Problematisch jedoch ist, dass diese Strukturen in Anwesenheit von Wasser zur Bildung von Hydrogelen neigen, was ihre Einsatzbreite sehr weit einschränkt. Ein zweites Problem mit solchen $(AB)_n$ Strukturen ist, dass die Kontrolle des Molgewichts während der Produktion nicht trivial ist, was zu einer aufwändigen Prozessführung führt. Weiterhin sind solche Strukturen durch ihr hohes Molekulargewicht meist hoch viskos, was zu Schwierigkeiten in der Handhabung seitens der Verschäumer führen kann.

US 6,730,749 B1 beschreibt bestimmte Siloxanblockcopolymere mit verknüpften, unterschiedlichen Siloxanblöcken und deren Verwendung als Additive bei der Herstellung von Polyurethanschäumen. So wird dort ein über Octadien verknüpftes Siloxanblockcopolymer offenbart.

Vor diesem Hintergrund war es daher die Aufgabe der vorliegenden Erfindung, einen viskoelastischen Polyurethanschaum mit feiner Zellstruktur und hoher Offenzelligkeit, bereitzustellen.

Diese Aufgabe konnte überraschenderweise gelöst werden, indem man bei der Herstellung von viskoelastischen Polyurethanschaumstoffen bestimmte verknüpfte Siloxan-Blockpolymere als Additiv einsetzt.

Entsprechend löst der Gegenstand der Erfindung die gestellte Aufgabe. Gegenstand der Erfindung ist die Verwendung von verknüpften Siloxan-Blockpolymeren der allgemeinen durchschnittlichen Formel (I)

$$M_a\, M^1_b\, D_c\, D^1_d\, T_e\, Q_f\, G_g \qquad \text{Formel (I)}$$

mit

M = 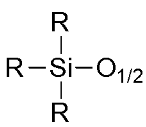

$M^1$ = 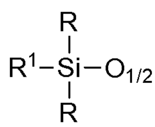

D = 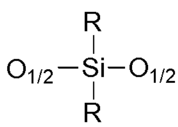

$D^1$ = 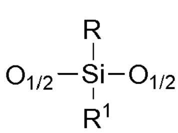

T = 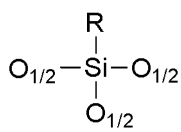

Q = 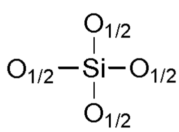

G = unabhängig voneinander gleiche oder verschiedene Reste aus der Gruppe:

$$\left( O_{1/2} \right)_n SiR_m - CH_2CHR^3 - R^2 - CHR^3CH_2 - SiR_m \left( O_{1/2} \right)_n .$$

$$\left( O_{1/2} \right)_n SiR_m - CH_2CHR^3 - R^2 - CR^3{=}CH_2$$

$$\left( O_{1/2} \right)_n SiR_m - CH_2CHR^3 - R^2 - CR^3{=}CR^3 - CH_3$$

a = 0 - 20, bevorzugt 0 - 10, z. B. 1 -8 oder 2-8, insbesondere 2,4 - 4,1,
b = 0 - 20, bevorzugt 0 - 10, z.B. 1-8 oder 2-8, insbesondere 0,
c = 3 - 450, bevorzugt 5 - 350, z.B. 5 -300, insbesondere 10 - 250,
d = 0 - 40, bevorzugt 1 - 30, z.B. 1-20, insbesondere 1,5 - 20,
e = 0 - 20, bevorzugt 0 - 10, z.B. 1-8, insbesondere 0,
f = 0 - 20, bevorzugt 0 - 10, z.B. 1-8, insbesondere 0,
g = 0,1 - 3, bevorzugt 0,15 - 2, insbesondere 0,2 - 1,5,
wobei $a + b \geq 2$ sowie $N = a + b + c + d + e + f + g \geq 11$ und $\leq 500$, $b + d \geq 1$
R = unabhängig voneinander gleiche oder verschiedene Alkylreste mit 1 - 16 Kohlenstoffatomen oder Arylreste mit 6 - 16 Kohlenstoffatomen oder H oder $-OR^3$, bevorzugt Methyl, Ethyl, Phenyl, Oktyl, Dodecyl oder H, insbesondere Methyl,
$R^1$ = unabhängig voneinander gleiche oder verschiedene Polyetherreste, bevorzugt gleiche oder verschiedene Polyetherreste der allgemeinen Formel (II)

$$-\left[CH_2\right]_h-O-\left[CH_2CH_2O\right]_i-\left[CH_2CH(CH_3)O\right]_j-\left[CH(CH_3)CH_2O\right]_k-\left[CR^4{}_2CR^4{}_2O\right]_l-R^5$$

Formel (II)

$R^2$ = unabhängig voneinander gleiche oder verschiedene divalente organische Reste, bevorzugt gleiche oder verschiedene divalente organische Reste mit 1 - 50, besonders bevorzugt mit 2 - 30 Kohlenstoffatomen, die gegebenenfalls durch Ether-, Ester oder Amidfunktionen oder $(-SiR_2O-)_n$-Gruppen unterbrochen sind und gegebenenfalls OH-Funktionen tragen,
$R^3$ = unabhängig voneinander gleiche oder verschiedene Alkylreste mit 1 - 16 Kohlenstoffatomen oder Arylreste mit 6 - 16 Kohlenstoffatomen oder H,
$R^4$ = gleiche oder verschiedene Alkylreste mit 1 bis 18 Kohlenstoffatomen, die gegebenenfalls Etherfunktionen besitzen, oder Arylreste mit 6 - 18 Kohlenstoffatomen , die gegebenenfalls Etherfunktionen besitzen, oder H, bevorzugt H, Ethyl und Benzyl,
$R^5$ = gleiche oder verschiedene Reste aus der Gruppe: $R^3$, H, $-C(O)R^3$, bevorzugt Methyl, Butyl, H oder -C(O)Me,
n = unabhängig voneinander 1 oder 2
m = unabhängig voneinander 1 oder 2
m + n = 3
h = 2 - 18, bevorzugt 2 - 10, insbesondere bevorzugt 3,
i = 0 - 100, bevorzugt 0 - 80, insbesondere bevorzugt 0 - 50, z.B. 1-40,
j = 0 - 100, bevorzugt 0 - 80, insbesondere bevorzugt 0 - 50, z.B. 1-40,
k = 0 - 100, bevorzugt 0 - 80, insbesondere bevorzugt 0 - 50, z.B. 1-40,
l = 0 - 80, bevorzugt 0 - 40, z.B. 1-30, insbesondere bevorzugt 0,
mit der Maßgabe $i + j + k + l \geq 3$,
als Additiv bei der Herstellung von viskoelastischem Polyurethanschaum, unter Einsatz von Polyolmischungen und zumindest einer Isocyanatkomponente,
wobei die insgesamt eingesetzte Polyolkomponente eine durchschnittliche Hydroxylzahl, bestimmt nach DIN 53240-1:2012-07, von 57 - 300 mg KOH/g aufweist, und wobei die Herstellung des PUR-Schaumes bei einem Isocyanat-Index von 65 bis 108 erfolgt.

Der Begriff der "insgesamt eingesetzten Polyolkomponente" umfasst die Gesamtheit des im erfindungsgemäßen Verfahren eingesetzten Polyols, umfasst also alle eingesetzten Polyolkomponenten, umfasst also insbesondere auch Polyolmischungen.

Zur Beschreibung der Siloxane wird hier eine Schreibweise analog der Literatur: Walter Noll, Chemie und Technologie der Silicone, Verlag Chemie GmbH, 2. Auflage, 1968, gewählt. Die erfindungsgemäßen Polyethersiloxane besitzen verschiedenen Siloxaneinheiten, die im Molekül verschiedenartig miteinander kombiniert sein können. Die Zusammensetzung der Siloxaneinheiten ergibt sich unter der Berücksichtigung der Tatsache, dass jedes Sauerstoffatom vorzugsweise als Brückenglied zwischen je zwei Siliziumatomen fungiert und demgemäß jedem Siliziumatom nur zur Hälfte zuzurechnen ist. Die verschiedenen Siloxaneinheiten sind über 2 halbe Sauerstoffatome ($-O_{1/2}O_{1/2}-$) Gruppen miteinander verknüpft, wodurch eine Sauerstoffbrücke (-O-) dargestellt wird.

Der Isocyanat-Index ist eine auf dem Gebiet der Polyurethane fest etablierte Kennzahl und beschreibt das Verhältnis von tatsächlich eingesetztem Isocyanat zu (für eine stöchiometrische Umsetzung mit Polyol) berechnetem Isocyanat, multipliziert mit 100. Ein Index von 100 steht für ein molares Verhältnis der reaktiven Gruppen von 1 zu 1.

Der erfindungsgemäße Gegenstand ermöglicht die überraschend einfache Bereitstellung von viskoelastische Polyurethanschaum mit besonders feiner Zellstruktur und hoher Offenzelligkeit. Bei der Schaumherstellung resultieren besonders hochwertige Schäume mit guter, stabiler und homogener Schaumstruktur und günstigen Brandeigenschaften im Brandfall. Dabei kann auf die gewohnten Produktionsanlagen zurückgegriffen werden. Weitere Vorteile der Erfindung liegen darin, dass die erfindungsgemäßen Produkte der Formel (I), auch Siloxane der Formel (I) genannt, leicht handzuhaben sind, insbesondere eine geringe Viskosität aufweisen und vorteilhafterweise hydrolysestabil, emissionsarm und nahezu geruchsneutral sind. Sie verfügen über ein breites Verarbeitungsspiel und sind nach Standardverfahren reproduzierbar herstellbar. Der erfindungsgemäße Einsatz der Siloxane der Formel (I) führt zu keinen nachteiligen Effekten bei den physikalischen Eigenschaften des viskoelastischen Schaumstoffs. Insbesondere werden Zugfestigkeit, Druckverformung, Ausdehnung des Schaumstoffs nicht beeinträchtigt.

Die erfindungsgemäße Verwendung ermöglicht somit die einfache Bereitstellung besonders hochwertiger viskoelastischer Polyurethanschäume.

Der erfindungsgemäß erhältliche Polyurethanschaum weist vorzugsweise eine Rückprallelastizität gemessen im Kugelfallversuch gemäß DIN EN ISO 8307:2007 von kleiner 10 %, bevorzugt von 0 bis 7,5 % auf. Die Gasdurchlässigkeit des erfindungsgemäß erhältlichen Polyurethanschaums beträgt vorzugsweise von 1 bis 300 mm Wassersäule, bevorzugt 5 bis 200 mm Wassersäule in Anlehnung an DIN ISO 4638:1993-07 (gemessen durch Messung der Druckdifferenz bei der Durchströmung einer Schaumprobe. Hierfür wird eine 5 cm dicke Schaumscheibe auf eine glatte Unterlage gelegt. Eine 800 g schwere Platte (10 cm x 10 cm) mit zentraler Bohrung (Durchmesser 2 cm) und einem Schlauchanschluß wird auf der Schaumprobe platziert. Über die zentrale Bohrung wird ein konstanter Luftstrom von 100 l/h in die Schaumprobe geleitet. Die auftretende Druckdifferenz (relativ zu ungehindertem Ausströmen) wird mittels einer Wassersäule in einem graduierten Druckmesser ermittelt. Je geschlossener der Schaum ist, desto mehr Druck wird aufgebaut und desto mehr wird der Spiegel der Wassersäule nach unten gedrückt und desto größere Werte werden gemessen, von geschlossenen Schäumen spricht man ab etwa 300 mm Wassersäule).

Die Dichte des erfindungsgemäß erhältlichen Polyurethanschaums, liegt vorzugsweise bei 15 bis 150 $kg/m^3$, bevorzugt bei 30 bis 140 $kg/m^3$ und besonders bevorzugt bei 35 bis 130 $kg/m^3$ (gemessen nach DIN EN ISO 845:2009-10).

Die Porenstruktur (mittlere Zahl der Zellen pro 1 cm) beträgt im erfindungsgemäß erhältlichen Polyurethanschaum vorzugsweise von 5 bis 25 Zellen/cm und wird auf einer Schnittfläche optisch bestimmt (gemessen gemäß DIN EN 15702).

Der erfindungsgemäß erhältliche Polyurethanschaum weist bei einer 40 %-igen Kompression vorteilhafterweise eine Druckspannung von vorzugsweise 0,1 kPa bis 5 kPa, bevorzugt 0,5 bis 2,5 kPa, bestimmt gemäß DIN EN ISO 3386-1:1997 + A1:2010 auf. Die Zellstruktur des erfindungsgemäß erhältlichen Polyurethanschaums ist vorzugsweise zu mehr als 80 % offenzellig (gemessen gemäß DIN ISO 4590).

Bevorzugte erfindungsgemäß erhältliche Polyurethanschäume sind solche bei denen zwei oder mehr der oben genannten bevorzugten Parameter (Rückprallelastizität, Dichte, Porenstruktur, Druckspannung, Zellstruktur), vorzugsweise alle der oben genannten Parameter, in bevorzugt dem engsten angegebenen Bereich vorliegen.

Eine offenbarte Verwendung ermöglicht auch die einfache Bereitstellung von Polyurethanheißweichschaumstoff, insbesondere eines auf Polyetherpolyolen basierenden Polyurethanheißweichschaums. Polyurethanheißweichschaumstoff weist gemäß DIN 7726 bei Druckbeanspruchung einen Verformungswiderstand von vorzugsweise kleiner 15 kPa auf (gemessen gemäß DIN 53421).

Überraschenderweise konnte gefunden werden, dass das erfindungsgemäße Siloxan nach Formel (I) bei der Bereitstellung viskoelastischer Polyurethanschäume als Zellöffner fungiert. Noch weitere Vorteile der Erfindung liegen darin, dass sie die Bereitstellung von viskoelastischem Polyurethan-Schaum mit verringerten Emissionen, die Bereitstellung von geruchsarmen viskoelastischem Polyurethan-Schaum sowie die Verhinderung von Schrumpf bei der Herstellung von viskoelastischem Polyurethan-Schaum ermöglicht.

"Verringerte Emissionen" umfasst im Sinne der vorliegenden Erfindung insbesondere, dass der viskoelastische

Polyurethanschaum eine Emission der flüchtigen organischen Verbindungen (VOC) von < 500 µg/m³ aufweist, entsprechend ermittelt nach dem Prüfkammerverfahren in Anlehnung an die DIN-Norm DIN EN ISO 16000-9:2008-04, 24 Stunden nach Prüfkammerbeladung. Die im Sinne der vorliegenden Erfindung gewählten Bestimmungsmethoden in Anlehnung an die DIN-Norm DIN EN ISO 16000-9:2008-04 sind im Beispielteil detailliert erläutert.

Geruchsarm bedeutet hier, dass das resultierende Polyurethansystem einen möglichst geringen Produktgeruch aufweist, insbesondere bei Verwendung des erfindungsgemäßen Siloxans nach Formel (I) als alternativen Zellöffner zu Zellöffnern nach dem Stand der Technik, was insbesondere durch olfaktorische Überprüfung durch ein Panel von geruchlich geschulten Personen überprüfbar ist. Die im Sinne der vorliegenden Erfindung gewählten Bestimmungsmethoden sind im Beispielteil detailliert erläutert.

Grundsätzlich haben Polyether-modifizierte Polyethersiloxane einen negativen Einfluss auf die Brennbarkeit von Polyurethanschäumen. Jedoch kann durch die Struktur des Siloxans Einfluss auf das Brandverhalten genommen werden. In Kombination mit Flammschutzmitteln werden für Anwendungen mit besonders hohen Anforderungen an das Brandverhalten sogenannte FR-Stabilisatoren eingesetzt, welche sich strukturell von konventionellen Polyethersiloxanen in Art und Anzahl der verknüpften Polyetherketten unterscheiden und somit positiven Einfluss auf das Brandverhalten haben, beispielsweise kann so die Menge an Flammschutzmittel reduziert werden. Vorteilhafterweise leistet die Erfindung einen Beitrag zur Bereitstellung von viskoelastischen Polyurethanschäumen mit verbesserten Flammschutzeigenschaften, so dass hohen Anforderungen an das Brandverhalten einfacher entsprochen werden kann.

Die erfindungsgemäße Verwendung, wobei das Siloxan nach Formel (I) in Form einer Additivzusammensetzung zur Anwendung gelangt, umfassend 0 bis 90 Gew.-%, vorzugsweise 10 bis 80 Gew.-%, besonders bevorzugt 20 bis 70 Gew.-%, bezogen auf die gesamte Additivzusammensetzung, eines oder mehrerer anorganischer oder organischer Lösungsmittel, vorzugsweise ausgewählt aus Wasser, Alkoholen, insbesondere Polyethermonoolen oder -polyolen, vorzugsweise bestehend aus H-funktionellen Startersubstanzen, an welche mittels Alkoxylierung Alkylenoxide (Epoxide) mit 2-24 Kohlenstoffatomen, vorzugsweise Ethylenoxid und/oder Propylenoxid, angelagert wurden und die ein Molekulargewicht von vorzugsweise 200 - 8000 g/mol, bevorzugt von 300 - 5000 g/mol, besonders bevorzugt von 500 - 1000 g/mol, und einen PO-Gehalt von vorzugsweise 10 - 100 Gew.%, bevorzugt von 50 - 100 Gew.% aufweisen sowie Polyestermonolen oder - polyolen mit einem Molekulargewicht vorzugsweise im Bereich von 200 bis 4500 g/mol, Glykolen, Alkoxylaten, Carbonaten, Ether, Ester, verzweigten oder linearen aliphatischen oder aromatischen Kohlenwasserstoffen und/oder Ölen synthetischer und/oder natürlicher Herkunft, entspricht einer bevorzugten Ausführungsform der Erfindung.

Die Herstellung der erfindungsgemäß verwendeten Polysiloxane ist an sich bekannt. Sie kann z.B. erfolgen, wie in WO2009/035563, dort insbesondere Abschitte [0021] und [0025] bis [0028], beschrieben. Auf die WO2009/035563 und insbesondere deren Offenbarungsgehalt zur Herstellung der erfindungsgemäß verwendeten Polysiloxane wird hiermit ausdrücklich Bezug genommen. Die erfindungsgemäß verwendeten Polysiloxane können im Allgemeinen hergestellt werden durch eine platinkatalysierte Additionsreaktion eines Siloxans enthaltend ein Silanwasserstoffatom mit einem linearen Polyoxyalkylenoxid-Polyether, dessen lineare Kette an einem Ende blockiert ist mit einer Alkylenoxygruppe (wie Allyloxy- oder Vinyloxy-) und an einem anderen Ende ein Wasserstoffatom trägt oder beispielsweise mit einer Alkoxy-, Aralkyloxy- oder Acyloxygruppe verschlossen ist. Vorteilhafterweise werden verbrückende Substanzen eingesetzt, welche ebenfalls in einer platinkatalysierten Additionsreaktion mit einem Siloxan enthaltend ein Silanwasserstoffatom reagieren können. Diese zeichnen sich dadurch aus, dass sie mindestens zwei Mehrfachbindungen aufweisen. Beispiele hierfür sind 1,5-Hexadien, 1,7-Octadien, Trimethylolpropandiallylether, Trimethylolpropantriallylether, Pentaerythrittriallylether, Divinylbenzol, Divinylcyclohexan, 1,4-Butandioldivinylether, Diallylether, Diallylpolyether, 1,3-Divinyltetramethyldisiloxan, $\alpha,\omega$-Divinylsiloxane, Diundecylensäureester, Pentaerythritoltetraacrylat und Trimethylolpropantriacrylat.

In völlig überraschender Weise wurde jedoch jetzt im Rahmen dieser Erfindung gefunden, dass die Verwendung der erfindungsgemäßen Siloxane nach Formel (I) einen besonders einfachen Zugang zu viskoelastischem Polyurethanschaum ermöglicht, wobei die spezifischen Polysiloxane als Zellöffner wirken.

Die erfindungsgemäß einzusetzenden Additive, nämlich die Siloxane der Formel (I), können sowohl alleine als auch in Kombination mit herkömmlichen Stabilisatoren eingesetzt werden. Hierbei kann es sich sowohl um Si-haltige und nicht Si-haltige, insbesondere Si-haltige und nicht Si-haltige organische Stabilisatoren und Tenside handeln. Die Si-haltigen Stabilisatoren können weiterhin darin unterschieden werden, ob der Polyoxyalkylenblock mit dem Polysiloxanblock durch eine hydrolytisch stabile C-Si-Bindung oder die hydrolytisch weniger stabile C-O-Si-Bindung verknüpft ist. Es entspricht einer bevorzugten Ausführungsform der Erfindung, die erfindungsgemäßen Siloxane der Formel (I) in Kombination mit herkömmlichen Stabilisatoren einzusetzen.

Die erfindungsgemäße Herstellung des Polyurethanschaums erfolgt üblicherweise in Gegenwart eines oder mehrerer Katalysatoren, die die Reaktionen Isocyanat-Polyol und/oder Isocyanat-Wasser und/oder die Isocyanat-Trimerisierung katalysieren.

Der Erfindungsgegenstand wird nachfolgend anhand von vorteilhaften Ausführungsformen genauer beschrieben. Sind nachfolgend Bereiche, allgemeine Formeln oder Verbindungsklassen angegeben, so sollen diese nicht nur

die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören. Bei Prozentangaben handelt es sich, wenn nicht anders angegeben, um Angaben in Gewichtsprozent. Werden nachfolgend Mittelwerte angegeben, so handelt es sich, wenn nicht anderes angegeben, um Gewichtsmittel. Wenn nicht anders angegeben wurde die Molmasse der eingesetzten Verbindungen in Anlehnung an DIN 55672-1:2007-8 durch Gelpermeationschromatographie (GPC) bestimmt, wobei die Kalibrierung gegen einen Polypropylenglycolstandard (76 - 6000 g/mol) erfolgte. Die Struktur der eingesetzten Verbindungen wurde durch NMR-Methoden, insbesondere durch $^{13}C$- und $^{29}Si$-NMR bestimmt. Die Hydroxylzahlen können titrimetrisch nach DIN 53240-1:2012-07 bestimmt werden. Werden in der vorliegenden Erfindung chemische (Summen)-Formeln verwendet, so können die angegebenen Indizes sowohl absolute Zahlen als auch Mittelwerte darstellen. Bei polymeren Verbindungen stellen die Indizes vorzugsweise Mittelwerte dar. Sind nachfolgend Messwerte angegeben, so sind diese Messungen, wenn nicht anders angegeben bei Normalbedingungen (25 °C und 1013 mbar) durchgeführt worden.

In einer besonders bevorzugten Ausführungsform werden als Additiv bei der Herstellung von PUR-Schaum unter Einsatz zumindest einer Polyolkomponente und zumindest einer Isocyanatkomponente, wobei die insgesamt eingesetzte Polyolkomponente eine durchschnittliche Hydroxylzahl, bestimmt nach DIN 53240-1:2012-07, von 57 - 300 mg KOH/g aufweist, und wobei die Herstellung des PUR-Schaumes bei einem Isocyanat-Index von 65 bis 108 erfolgt, Siloxane der Formel (I) $M_a\ M^1_b\ D_c\ D^1_d\ T_e\ Q_f\ G_g$ eingesetzt, wie zuvor bereits angegeben, wobei d = 1 - 40, bevorzugt 1,2 - 30, insbesondere 1,5 - 20 ist. Für die übrigen Indices, Parameter und Strukturelemente der Formel (I) gilt das zuvor Gesagte.

In einer weiteren bevorzugten Ausführungsform gelten für die Siloxane der Formel (I) die folgenden Indices:

a = 2 - 8, insbesondere 2,4 - 4,1,
b = 0,
c = 3 - 450, insbesondere 10 - 250,
d = 1 - 40, bevorzugt 1,2 - 30, insbesondere 1,5 - 20,
e = 0,
f = 0,
g = 0,1 - 3, bevorzugt 0,15 - 2, insbesondere 0,2 - 1,5,
wobei $a + b \geq 2$ sowie $N = a + b + c + d + e + f + g \geq 11$ und $\leq 500$, $b + d \geq 1$. Für die übrigen Indices, Parameter und Strukturelemente der Formel (I) gilt das zuvor Gesagte.

Wenn das insgesamt eingesetzte Siloxan der Formel (I) zumindest zu einem Anteil von 5 Gew.-% eine Molmasse > 50000 g/mol, vorzugsweise > 60000 g/mol aufweist, bezogen auf das insgesamt eingesetzte Siloxan der Formel (I), so liegt eine bevorzugte Ausführungsform der Erfindung vor.

Vorzugsweise kann der viskoelastische PUR-Schaum dadurch erzeugt werden, dass eine Mischung enthaltend zumindest einen Urethan- und/oder Isocyanurat-Katalysator, zumindest ein Treibmittel und/oder Wasser, zumindest eine Isocyanatkomponente und eine Polyolmischung, enthaltend mindestens ein Polyol mit einer Hydroxylzahl > 100 mg KOH/g (vorzugsweise mindestens ein dreifunktioneller Polyetheralkohol mit einer Hydroxylzahl > 100 mg KOH/g und im wesentlichen Propylenoxideinheiten in der Kette) in Gegenwart des erfindungsgemäßen Siloxans nach Formel (I) verschäumt wird, wobei die insgesamt eingesetzte Polyolkomponente eine durchschnittliche Hydroxylzahl, bestimmt nach DIN 53240-1:2012-07, von 57 - 300 mg KOH/g aufweist, und wobei die Herstellung des PUR-Schaumes bei einem Isocyanat-Index von 65 bis 108 erfolgt.

Neben den bereits genannten Komponenten kann die Mischung weitere übliche Bestandteile aufweisen, wie z. B. optional (weitere) Treibmittel, optional Präpolymere, optional Flammschutzmittel und optional weitere Additive, wie z. B. Füllstoffe, Emulgatoren, die vorzugsweise auf der Umsetzung von hydroxyfunktionellen Verbindungen mit Isocyanat beruhen, Stabilisatoren, wie z. B. Si-haltige und nicht Si-haltige, insbesondere Si-haltige und nicht Si-haltige organische Stabilisatoren und Tenside, Viskositätssenker, Farbstoffe, Antioxidantien, UV-Stabilisatoren oder Antistatika.

Weitere Angaben zu verwendbaren Ausgangsstoffen, Katalysatoren sowie Hilfs- und Zusatzstoffen finden sich beispielsweise im Kunststoff-Handbuch, Band 7, Polyurethane, Carl-Hanser-Verlag München, 1. Auflage 1966, 2. Auflage, 1983 und 3. Auflage, 1993.

Die Gesamtmenge an Siloxan der Formel (I) wird vorzugsweise so gewählt, daß 0,001 bis 10 Gew.-Teile, insbesondere 0,2 bis 5 Gew.-Teile des Siloxans pro 100 Teilen des insgesamt eingesetzten Polyol eingesetzt werden.

Insbesondere ist es bevorzugt, dass die Herstellung des PUR-Schaums unter Einsatz von reaktivem Amin und/oder Amin mit einer Molmasse > 100 g/mol erfolgt, vorzugsweise mit einer Molmasse > 160 g/mol als Katalysator erfolgt.

Die nachstehenden Verbindungen, Komponenten und Additive sind lediglich beispielhaft genannt und können

durch andere dem Fachmann bekannte Stoffe ersetzt werden.

Weitere Tenside, die bei der erfindungsgemäßen Herstellung von Polyurethanschaumstoffen vorteilhafterweise eingesetzt werden können, können z. B. ausgewählt sein aus der Gruppe umfassend nichtionische Tenside und/oder amphotere Tenside.

Als Tenside können erfindungsgemäß beispielsweise auch polymere Emulgatoren, wie Polyalkylpolyoxyalkylpolyacrylate, Polyvinylpyrrolidone oder Polyvinylacetate verwendet werden. Ebenso können als Tenside/Emulgatoren Präpolymere, die durch Umsetzung von geringen Mengen von Isocyanaten mit Polyolen erhalten werden (sog. Oligourethane), und die vorzugsweise gelöst in Polyolen vorliegen, eingesetzt werden.

Als Schaumstabilisatoren können vorzugsweise jene eingesetzt werden, die aus dem Stand der Technik bekannt sind und auf die auch üblicherweise zur Polyurethanschaumstabilisierung zurückgegriffen wird. Hierbei kann es sich sowohl um Si-haltige und nicht Si-haltige, insbesondere Si-haltige und nicht Si-haltige organische Stabilisatoren und Tenside handeln. Die Si-haltigen Stabilisatoren werden weiterhin darin unterschieden, ob der Polyoxyalkylenblock mit dem Polysiloxanblock durch eine hydrolytisch stabile C-Si-Bindung (wie beispielsweise in EP 2 182 020) oder die hydrolytisch weniger stabile C-O-Si-Bindung verknüpft ist. Die zur Polyurethanschaumstabilisierung verwendbaren SiC-Polysiloxan-Polyoxyalkylen-Blockmischpolymerisate können z.B. durch edelmetallkatalysierte Hydrosilylierung von ungesättigten Polyoxyalkylenen mit SiH-funktionellen Siloxanen, sogenannten Wasserstoffsiloxanen, wie beispielsweise in der EP 1 520 870 beschrieben, hergestellt werden. Die Hydrosilylierung kann batchweise oder kontinuierlich, wie beispielsweise in der DE 198 59 759 C1 beschrieben, durchgeführt werden.

Eine Vielzahl weiterer Schriften, wie beispielsweise die EP 0 493 836 A1, US 5 565 194 oder EP 1 350 804 offenbaren jeweils speziell zusammengesetzte Polysiloxan-Polyoxyalkylen-Blockmischpolymerisate zur Erfüllung spezifischer Anforderungsprofile für Schaumstabilisatoren in diversen Polyurethanschaumformulierungen.

Als Biozide können handelsübliche Produkte verwendet werden, wie Chlorophen, Benzisothiazolinon, Hexahydro-1,3,5-tris(hydroxyethyl-s-triazin), Chlormethylisothiazolinon, Methylisothiazolinon oder 1,6-Dihydroxy-2,5-dioxohexan, die unter den Handelsnamen BIT 10, Nipacide BCP, Acticide MBS, Nipacide BK, Nipacide CI, Nipacide FC bekannt sind.

Geeignete Flammschutzmittel im Sinne dieser Erfindung sind alle Substanzen, die im Stand der Technik als dafür geeignet betrachten werden. Bevorzugte Flammschutzmittel sind beispielsweise flüssige organische Phosphor-Verbindungen, wie halogenfreie organische Phosphate, z.B. Triethylphosphat (TEP), halogenierte Phosphate, z.B. Tris(1-chlor-2-propyl)phosphat (TCPP), Tris(1,3-dichlor-2-propyl)phosphat (TDCPP) und Tris(2-chlorethyl)phosphat (TCEP) und organische Phosphonate, z.B. Dimethylmethanphosphonat (DMMP), Dimethylpropanphosphonat (DMPP), oder Feststoffe wie Ammoniumpolyphosphat (APP) und roter Phosphor. Des Weiteren sind als Flammschutzmittel halogenierte Verbindungen, beispielsweise halogenierte Polyole, sowie Feststoffe wie Blähgraphit und Melamin geeignet. Alle diese Flammschutzmittel und Kombinationen daraus können im Sinne dieser Erfindung vorteilhafterweise benutzt werden, darin enthalten auch alle kommerziell erhältlichen Flammschutzmittel der Firmen Great Lakes Solutions (Chemtura) (z.B.: DP-54™, Firemaster® BZ-54 HP, Firemaster® 550, Firemaster® 552, Firemaster® 600, Firemaster® 602, Reofos® 50, Reofos® 65, Reofos® 95, Kronitex® CDP), ICL Industrial Products (z.B.: FR-513, FR-1210, FR-1410, Fyrol™ FR-2, Fyrol™ 38, Fyrol™ HF-5, Fyrol™ A300TB, Fyrol™ PCF, Fyrol™ PNX, Fyrol™ PNX-LE), Clariant (z.B.: Exolit® OP 550 oder Exolit® OP 560).

Es können alle Komponenten außer den Polyolen und Isocyanaten vor dem Verschäumen zu einer Aktivatorlösung vermischt werden. Diese enthält dann vorzugsweise u.a. das erfindungsgemäß verwendbare Siloxan nach Formel (I), Stabilisatoren, Katalysatoren, Treibmittel, beispielsweise Wasser, sowie eventuell weitere Additive, wie Flammschutz, Farbe, Biozide etc, je nach Rezeptur des Polyurethanschaumstoffs. Auch eine solche Aktivatorlösung ist ein Gegenstand der vorliegenden Erfindung.

Bei den Treibmitteln unterscheidet man zwischen chemischen und physikalischen Treibmitteln. Zu den chemischen Treibmitteln gehört z. B. Wasser, dessen Reaktion mit den Isocyanatgruppen zur Bildung von $CO_2$ führt. Die Rohdichte des Schaumstoffes lässt sich durch die zugegebene Wassermenge steuern, wobei die bevorzugten Einsatzmengen an Wasser zwischen 0,5 und 10 Teilen, bevorzugt zwischen 1 und 7 Teilen, besonders bevorzugt zwischen 1 und 5 Teilen, bezogen auf 100,0 Teile Polyol, liegen. Darüber hinaus können alternativ und/oder auch zusätzlich, physikalische Treibmittel, eingesetzt werden. Dabei handelt es sich um Flüssigkeiten, welche gegenüber den Rezepturbestandteilen inert sind und Siedepunkte unter 100 °C, vorzugsweise unter 50 °C, insbesondere zwischen -50 °C und 30 °C bei Atmosphärendruck aufweisen, so dass sie unter dem Einfluss der exothermen Polyadditionsreaktion verdampfen. Beispiele derartiger, vorzugsweise verwendbarer Flüssigkeiten sind Ketone wie Aceton und/oder Methylethylketon, Kohlenwasserstoffe, wie n-, iso- oder Cyclopentan, n- oder iso-Butan und Propan, Cyclohexan, Ether, wie Dimethlyether und Diethylether, halogenierte Kohlenwasserstoffe, wie Methylenchlorid, Tetrafluorethan, Pentafluorpropan, Heptafluorpropan, Pentafluorbutan, Hexafluorbutan und/oder Dichlormonofluorethan, Trichlorfluormethan, Dichlortetrafluorethan und 1,1,2-Trichlor-1,2,2-trifluorethan. Des Weiteren kann auch Kohlendioxid eingesetzt werden. Auch Gemische dieser niedrigsiedenden Flüssigkeiten untereinander und/oder mit anderen substituierten oder unsubstituierten Kohlenwasserstoffen können verwendet werden. Die Verschäumung kann sowohl unter Normaldruck, als auch unter vermindertem

Druck ablaufen (VPF-Technologie).

Die Menge des im Rahmen der Erfindung vorzugsweise einsetzbaren physikalischen Treibmittels liegt dabei bevorzugt im Bereich zwischen 0 und 50 Gew.-Teilen, insbesondere zwischen 1 und 15 Gew.-Teilen, die Menge an Wasser vorzugsweise im Bereich zwischen 0,5 bis 10 Gew.-Teilen, insbesondere 1 bis 5 Gew.-Teilen, jeweils bezogen auf 100 Gew.-Teile Polyol. Kohlendioxid wird von den physikalischen Treibmitteln bevorzugt, welches bevorzugt in Kombination mit Wasser als chemischem Treibmittel verwendet wird.

Die erfindungsgemäße Aktivatorlösung kann zusätzlich alle üblichen im Stand der Technik für Aktivatorlösungen bekannten Zusätze enthalten. Die Zusätze können ausgewählt sein aus der Gruppe umfassend Flammschutzmittel, Antioxidantien, UV-Stabilisatoren, Farbstoffe, Biozide, Pigmente, Zellöffner, Vernetzer und dergleichen.

Eine Aktivator-Zusammensetzung, geeignet zur Herstellung von viskoelastischem Polyurethanschaum, umfassend Polyol, enthaltend mindestens ein Polyol mit einer Hydroxylzahl > 100 mg KOH/g, Siloxan gemäß Formel (I), Aminkatalysator, optional Katalysatoren, wobei Zinn-haltige Katalysatoren ausgenommen sind, wobei das insgesamt enthaltene Polyol eine durchschnittliche Hydroxylzahl, bestimmt nach DIN 53240-1:2012-07, von 57 - 300 mg KOH/g aufweist, ist ein weiterer Gegenstand der vorliegenden Erfindung. Es ist ein besonderer Vorzug der vorliegenden Erfindung, dass diese die Bereitstellung besonders lager- und hydrolysestabiler Aktivatorzusammensetzungen ermöglicht.

Zur Herstellung eines viskoelastischen Polyurethanschaumstoffs kann im Rahmen der Erfindung vorzugsweise ein Gemisch (Mischung) aus Polyol, enthaltend mindestens ein Polyol mit einer OH-Zahl > 100 mg KOH/g (vorzugsweise mindestens ein dreifunktionelles Polyetheralkohol mit einer Hydroxylzahl > 100 mg KOH/g und im wesentlichen Propylenoxideinheiten in der Kette), di- oder polyfunktionellem Isocyanat, erfindungsgemäßem Siloxan nach Formel (I), Aminkatalysator, Kalium-, Zink- und/oder Zinn-organischer-Verbindung oder andere metallhaltige Katalysatoren, Stabilisator, Treibmittel, vorzugsweise Wasser zur Bildung von $CO_2$ und, falls nötig, Zusatz von physikalischen Treibmitteln, gegebenenfalls unter Zugabe von Flammschutzmitteln, Antioxidantien, UV-Stabilisatoren, Farbpasten, Bioziden, Füllstoffen, Vernetzern oder sonstigen üblichen Verarbeitungshilfsmitteln, umgesetzt werden, wobei die insgesamt eingesetzte Polyolkomponente eine durchschnittliche Hydroxylzahl, bestimmt nach DIN 53240-1:2012-07, von 57 - 300 mg KOH/g aufweist, und wobei die Herstellung des PUR-Schaumes bei einem Isocyanat-Index von 65 bis 108 erfolgt. Ein solches Gemisch stellt ebenfalls einen Gegenstand der Erfindung dar. Ein Gemisch, umfassend das erfindungsgemäß einzusetzende Siloxan nach Formel (I) und Polyol, umfassend Polyol mit einer OH-Zahl > 100 mg KOH/g (vorzugsweise mindestens ein dreifunktionelles Polyetheralkohol mit einer Hydroxylzahl > 100 mg KOH/g und im wesentlichen Propylenoxideinheiten in der Kette) stellt ebenfalls einen Gegenstand der Erfindung dar sein.

Als Isocyanate können organische Isocyanatverbindungen verwendet werden, die mindestens zwei Isocyanat-Gruppen enthalten. Generell kommen die an sich bekannten aliphatischen, cycloaliphatischen, araliphatischen und vorzugsweise aromatischen mehrwertigen Isocyanate in Frage.

Im Einzelnen seien beispielhaft genannt: Alkylendiisocyanate mit 4 bis 12 Kohlenstoffatomen im Alkylenrest, wie 1,12-Dodecandiisocyanat, 2-Ethyltetramethylendiisocyanat-1,4, 2-Methylpentamethylendiisocyanat-1,5, Tetramethylendiisocyanat-1,4 und vorzugsweise Hexamethylendiisocyanat-1,6, cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethylcyclohexan (IPDI), 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, und vorzugsweise aromatische Di- und Polyisocyanate, wie beispielsweise 2,4- und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'- und 2,2'-Diphenylmethandiisocyanaten, Polyphenylpolymethylenpolyisocyanate, Mischungen aus 4,4'-, 2,4'- und 2,2'-Diphenylmethandiisocyanaten und Polyphenylpolymethylenpolyisocyanaten (Roh-MDI) und Mischungen aus Roh-MDI und Toluylendiisocyanaten. Die organischen Di- und Polyisocyanate können einzeln oder in Form ihrer Mischungen eingesetzt werden.

Es ist auch möglich, Isocyanate einzusetzen, die durch den Einbau von Urethan-, Uretdion-, Isocyanurat-, Allophanat und anderen Gruppen modifiziert wurden, sogenannte modifizierte Isocyanate.

Besonders bewährt haben sich als organische Polyisocyanate und kommen daher vorzugsweise zur Anwendung:

Toluylendiisocyanat, Gemische aus Diphenylmethandiisocyanat-Isomeren, Gemische aus Diphenylmethandiisocyanat und Polyphenylpolymethylpolyisocyanat oder Toluylendiisocyanat mit Diphenylmethandiisocyanat und/oder Polyphenylpolymethylpolyisocyanat oder so genannte Präpolymere.

Es können sowohl TDI (2,4- und 2,6-Toluylendiisocyanat-Isomerengemisch) als auch MDI (4,4'-Diphenylmethandiisocyanat) verwendet werden. Das sogenannte "crude MDI" oder "polymere MDI" enthält neben dem 4,4'- auch die 2,4'- und 2,2'-Isomeren sowie höherkernige Produkte. Als "pure MDI" bezeichnet man zweikernige Produkte aus überwiegend 2,4'- und 4,4'-Isomerengemischen bzw. deren Präpolymere. Weitere geeignete Isocyanate sind in der Patentschrift EP 1095968 aufgeführt, auf die hier im vollen Umfang Bezug genommen wird.

Wenn die erfindungemäße Herstellung des PUR-Schaums unter Einsatz von Toluylendiisocyanat (TDI) und/oder Methylendiphenyldiisocyanat (MDI), vorzugsweise Toluylendiisocyanat, insbesondere unter Einsatz eines Gemisches aus 80 % Toluol-2,4-diisocyanat und 20 % Toluol-2,6-diisocyanat erfolgt, so liegt eine bevorzugte Ausführungsform der Erfindung vor.

Als Vernetzer werden niedermolekulare, gegenüber Isocyanaten reaktive mehrfunktionelle Verbindungen bezeichnet. Geeignet sind z.B. polyfunktionelle, insbesondere di- und trifunktionelle Verbindungen mit Molekulargewichten von 62 bis 1000 g/mol, vorzugsweise 62 bis 600 g/mol. Verwendung finden beispielsweise Di- und Trialkanolamine, wie Diethanolamin und Triethanolamin, aliphatische und aromatische Diamine, wie z. B. Ethylendiamin, Butylendiamin, Butylendiamin-1,4, Hexamethylendiamin-1,6, 4,4'-Diaminodiphenylmethan, 3,3'-dialkylsubstituierte 4,4'-Diaminodiphenylmethane, 2,4- und 2,6- Toluylendiamin und vorzugsweise aliphatische Diole und Triole mit 2 bis 6 Kohlenstoffatomen, wie Ethylenglykol, Propylenglykol, 1,4-Butylenglykol, 1,6-Hexamethylenglykol, 2-Methyl-1,3-propanediol Glycerin und Trimethylolpropan oder Ricinusöl oder Pentaerythrit, sowie höherwertige Alkohole, wie Zuckeralkohole, beispielsweise Saccharose, Glucose oder Sorbit und alkoxylierte Verbindungen aller zuvor genannten Beispiele.

Die Einsatzkonzentration liegt üblicherweise zwischen 0,1 und 5 Teilen, bezogen auf 100,0 Teile Polyol je nach Formulierung, kann aber auch davon abweichen. Bei Verwendung von MDI mit einer Funktionalität f > 2 bei der Formverschäumung übernimmt dies ebenfalls eine vernetzende Funktion. Der Gehalt an niedermolekularen Vernetzern kann daher bei steigender Menge an entsprechendem MDI reduziert werden.

Grundsätzlich kann die vorliegende Erfindung in allen bekannten Verfahren zur Herstellung von PUR-Schäumen zur Anwendung gelangen. Insbesondere kann das erfindungsgemäße Siloxan nach Formel (I) in der Blockverschäumung eingesetzt werden. Es können alle dem Fachmann bekannten Verfahren zur Herstellung von frei gestiegenen Polyurethanschaumstoffen verwendet werden. So kann zum Beispiel der Schäumungsprozess sowohl in horizontaler als auch in vertikaler Richtung in diskontinuierlichen oder kontinuierlichen Anlagen erfolgen. Die Verschäumung kann auch direkt in Formen erfolgen. Ebenso können die erfindungsgemäß einsetzbaren Siloxane nach Formel (I) für die $CO_2$-Technologie benutzt werden. Die Verwendung in Niederdruck- und Hochdruckmaschinen ist möglich, wobei die erfindungsgemäßen Siloxane nach Formel (I), oder diese enthaltende Formulierungen, sowohl direkt in die Mischkammer dosiert werden können oder auch schon vor der Mischkammer einer der danach in die Mischkammer gelangenden Komponenten zugemischt werden. Die Zumischung kann auch im Rohstofftank erfolgen.

Zur erfindungsgemäßen Herstellung der viskoelastischen Polyurethanschaumstoffe werden Polyolmischungen eingesetzt. Im Rahmen der vorliegenden Anmeldung werden unter Polyolen insbesondere Verbindungen verstanden werden, die mindestens zwei gegenüber Isocyanatgruppen reaktive H-Atome aufweisen, insbesondere also Diole, Triole etc. Vorzugsweise wird bei der Herstellung wenigstens ein Polyol verwendet, welches eine relativ hohe OH-Zahl (> 100 mg KOH/g) aufweist. Solches Polyol bewirkt, dass die Dichte an Netzwerkknotenpunkten erhöht und somit die Glastemperatur angehoben wird. Die Glastemperatur liegt bei erfindungsgemäßen viskoelastischen Schaumstoffen vorzugsweise zwischen -20 und +15 °C. Die Glasübergangstemperatur von Standard-Polyurethan-Weichschäumen liegt dagegen regelmäßig bei unter -35°C. Gemessen werden kann die mittlere Glasübergangstemperatur dabei mittels Dynamisch Mechanischer Analyse (DMA) (DIN 53513:1990-03) oder mittels Differentieller Kalorimetrie (DSC) (ISO 11357-2:2013). Dabei handelt es sich genau genommen um einen Glasübergangsbereich, der sich über einen Temperaturbereich erstreckt. Bedingt durch die hohe Glasübergangstemperatur der viskoelastischen Weichschaumstoffe sind bei Raumtemperatur immer noch einige Netzwerksegmente in dem Polyurethannetzwerk eingefroren und in ihrer Mobilität eingeschränkt. Dadurch wird die Elastizität des gesamten Polyurethan-Netzwerkes beeinflusst und ein zeitverzögertes Verhalten wird hervorgerufen.

Die OH-Zahl eines Polyols ist das Gewicht an Kaliumhydroxid in mg, welches für die Hydrolyse von 1 g des acetylierten Polyolderivats benötigt wird. Die OH-Zahl ist durch folgende Gleichung definiert:

$$OH\# = \frac{56.1 \times 1000 \times f}{MW}$$

mit

| | |
|---|---|
| OH# | = OH-Zahl des Polyols |
| f | = durchschnittliche Funktionalität (durchschnittlich Anzahl an Hydroxylgruppen pro Polyol-Molekül) |
| MW | = durchschnittliches Molgewicht des Polyols |

Polyole, die eine OH-Zahl > 100 mg KOH/g aufweisen sind kommerziell breit verfügbar. Alle diese Polyole und Kombinationen daraus können im Sinne dieser Erfindung vorteilhafterweise benutzt werden, darin enthalten alle entsprechenden Polyole der Firmen BASF (z.B.: Elastoflex 5918/100), Bayer Material Science (z.B.: Desmophen PU 24WB03), PCC Rokita (beispielsweise ROKOPOL EP8262.03), Dow Chemical (beispielsweise Voranol 2070, Voranol CP 755, Voranol CP 3150, Voranol WK 3140, Voranol HT 760 oder Voranol HAT 762), Huntsman (beispielsweise JEFFOL FX31-167 Polyol oder JEFFOL FX31-240 Polyol) oder Peterson Chemicals (beispielsweise SP168, SP170,

SP238).

Neben dem Polyol mit OH-Zahl > 100 mg KOH/g können als weitere Polyolkomponenten alle bekannten Polyolverbindungen in der Mischung optional enthalten sein.

Es kann sich hierbei z. B. um Polyether- oder Polyesterpolyole handeln, die typischerweise 2 bis 6 OH-Gruppen pro Molekül tragen und neben Kohlenstoff, Wasserstoff und Sauerstoff auch Heteroatome wie Stickstoff, Phosphor oder Halogene enthalten können; vorzugsweise werden Polyetherpolyole eingesetzt. Solche Polyole können nach bekannten Verfahren hergestellt werden, beispielsweise durch anionische Polymerisation von Alkylenoxiden in Gegenwart von Alkalihydroxiden oder Alkalialkoholaten als Katalysatoren und unter Zusatz mindestens eines Startermoleküls, das bevorzugt 2 oder 3 reaktive Wasserstoffatome gebunden enthält oder durch kationische Polymerisation von Alkylenoxiden in Gegenwart von Lewis-Säuren wie beispielsweise Antimonpentachlorid oder Borfluorid-Etherat oder durch Doppelmetallcyanidkatalyse. Geeignete Alkylenoxide enthalten 2 bis 4 Kohlenstoffatome im Alkylenrest. Beispiele sind Tetrahydrofuran, 1,2-Propylenoxid, 1,2- bzw. 2,3-Butylenoxid; vorzugsweise werden Ethylenoxid und/oder 1,2-Propylenoxid eingesetzt. Die Alkylenoxide können einzeln, alternierend nacheinander oder als Mischungen verwendet werden. Als H-funktionelle Startsubstanzen kommen insbesondere mehrfunktionelle Alkohole und/oder Amine zum Einsatz. Bevorzugt eingesetzte Alkohole sind zweiwertige Alkohole, beispielsweise Ethylenglykol, Propylenglykol, oder Butandiole, dreiwertige Alkohole, beispielsweise Glycerin, Trimethylolpropan oder Ricinusöl oder Pentaerythrit, sowie höherwertige Alkohole, wie Zuckeralkohole, beispielsweise Saccharose, Glucose oder Sorbit. Bevorzugt eingesetzte Amine sind aliphatische Amine mit bis zu 10 Kohlenstoffatomen, beispielsweise Ethylendiamin, Diethylentriamin, Propylendiamin, aromatische Amine, beispielsweise Toluylendiamin oder Diaminodiphenylmethan, sowie Aminoalkohole, wie Ethanolamin oder Diethanolamin.

Polyesterpolyole können durch Polykondensationsreaktion oder durch ringöffnende Polymerisation dargestellt werden. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydriden eingesetzt. Als Alkoholkomponenten werden z. B. Ethandiol, 1,2-Propandiol, 1,3-Propandiol, 1,4-Butandiol. 1,5-Pentandiol, Neopentylglykol, 1,6-Hexandiol, 1,4-Bis(hydroxymethyl)cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Startersubstanzen zur Herstellung der Polyetherpolycarbonatpolyole dienen können. Bevorzugt werden Polyetherpolyole mit Mn = 150 bis 2000 g/mol zur Herstellung der Polyesteretherpolyole eingesetzt.

Eine weitere Klasse von Polyolen sind solche, die als Präpolymere durch Umsetzung von Polyol mit Isocyanat in einem Molverhältnis von 100 zu 1 bis 5 zu 1, bevorzugt 50 zu 1 bis 10 zu 1 erhalten werden. Solche Präpolymere werden vorzugsweise gelöst in Polyol eingesetzt, wobei das Polyol bevorzugt dem zur Herstellung der Präpolymeren eingesetzten Polyol entspricht.

Noch eine weitere Klasse von Polyolen stellen die sogenannten Füllkörperpolyole (Polymerpolyole) dar. Diese zeichnen sich dadurch aus, dass sie feste organische Füllstoffe bis zu einem Feststoffgehalt von 40 Gew.-% oder mehr in disperser Verteilung enthalten. Man kann unter anderem verwenden:

SAN-Polyole: Dies sind hochreaktive Polyole, welche ein Copolymer auf der Basis Styrol/Acrylnitril (SAN) dispergiert enthalten.

PHD-Polyole: Dies sind hochreaktive Polyole, welche Polyharnstoff ebenfalls in dispergierter Form enthalten.

PIPA-Polyole: Dies sind hochreaktive Polyole, welche ein Polyurethan, beispielsweise durch in situ-Reaktion eines Isocyanats mit einem Alkanolamin in einem konventionellen Polyol gebildet, in dispergierter Form enthalten.

Der Festkörperanteil, der je nach Anwendung bevorzugt zwischen 5 und 40 Gew.-%, bezogen auf das Polyol liegt, ist für eine verbesserte Zellöffnung verantwortlich, so dass das Polyol insbesondere mit TDI kontrolliert verschäumbar wird und kein Schrumpfen der Schäume auftritt. Der Festkörper wirkt damit als wesentliche Prozesshilfe. Eine weitere Funktion besteht darin, über den Feststoffanteil die Härte zu kontrollieren, denn höhere Festkörperanteile bewirken eine höhere Härte des Schaums.

Die Formulierungen mit feststoffhaltigen Polyolen sind deutlich weniger eigenstabil und bedürfen daher neben der chemischen Stabilisierung durch die Vernetzungsreaktion eher auch zusätzlich einer physikalischen Stabilisierung.

Je nach Feststoffgehalt der Polyole werden diese alleine oder in Abmischung mit den oben genannten ungefüllten Polyolen eingesetzt.

Eine weitere Klasse von einsetzbaren Polyolen stellen die sogenannten autokatalytischen Polyole, insbesondere autokatalytische Polyetherpolyole, dar. Solche Polyole basieren zum Beispiel auf Polyether-Blöcken, vorzugsweise auf Ethylenoxid- und/oder Propylenoxid-Blöcken, und beinhalten zudem katalytisch aktive funktionelle Gruppen, wie zum Beispiel stickstoffhaltige funktionelle Gruppen, insbesondere Amino-Gruppen, vorzugsweise tertiäre Amin-Funktionen, Harnstoff-Gruppen und/oder Heterocyclen enthaltend Stickstoff-Atome. Durch die Verwendung solcher autokatalytsichen Polyole bei der Herstellung von Polyurethansystemen, insbesondere von Polyurethanschaumstoffen, bevorzugt von Polyurethanweichschaumstoffen, kann die benötigte Menge an ggf. zusätzlich verwendeten Katalysatoren je

nach Anwendung gegebenfalls reduziert und/oder auf spezielle gewünschte Schaumeigenschaften angepasst werden. Geeignete Polyole sind zum Beispiel in WO0158976 (A1), WO2005063841 (A1), WO0222702 (A1), WO2006055396 (A1), WO03029320 (A1), WO0158976 (A1), US6924321 (B2), US6762274 (B2), EP2104696 (B1), WO2004060956 (A1) oder WO2013102053 (A1) beschrieben und können zum Beispiel unter den Handelsnamen Voractiv™ und/oder SpecFlex™ Activ bei der Firma Dow bezogen werden.

Als Polyolkomponenten sind in der Reaktionsmischung vorzugsweise Polyetherpolyole, bevorzugt Polyoxypropylen-polyoxyethylen-polyole, die eine Funktionalität (Anzahl der aktiven H-Atome, insbesondere Anzahl der OH-Gruppen) von 2 bis 8 und zahlengemittelte Molekulargewichte im Bereich von 500 bis 8000, vorzugsweise 700 bis 4500 aufweisen, vorhanden. Vorzugsweise ist in der Polyolkomponente wenigstens ein Polyol anwesend, welches eine relativ hohe OH-Zahl von >100 mg KOH/g, bestimmbar gemäß DIN 53240-1:2012-07, aufweist. Weitere Polyole sind dem Fachmann bekannt und können zum Beispiel der EP-A-0 380 993 oder US-A-3 346 557 entnommen werden, auf die im vollen Umfang Bezug genommen wird. Die insgesamt eingesetzte Polyolkomponente weist eine durchschnittliche Hydroxylzahl, bestimmt nach DIN 53240-1:2012-07, von 57 - 300 mg KOH/g auf.

Als Treibmittel können die bekannten Treibmittel eingesetzt werden. Vorzugsweise werden bei der Herstellung des Polyurethanschaums Wasser, Methylenchlorid, Pentan, Alkane, halogenierte Alkane, Aceton und/oder Kohlendioxid als Treibmittel eingesetzt.

Das Wasser kann der Mischung direkt zugegeben werden oder aber als Nebenkomponente eines der Edukte, wie z. B. der Polyolkomponente, mit dieser der Mischung zugegeben werden.

Neben physikalischen Treibmitteln und ggf. Wasser können auch andere chemische Treibmittel eingesetzt werden, die mit Isocyanaten unter Gasentwicklung reagieren, wie beispielsweise Ameisensäure.

Als Katalysatoren können im Rahmen dieser Erfindung zum Beispiel jegliche Katalysatoren für die Reaktionen Isocyanat-Polyol (Urethan-Bildung) und/oder Isocyanat-Wasser (Amin- und Kohlenstoffdioxid-Bildung) und/oder die Isocyanat-Dimerisierung (Uretdion-Bildung) Isocyanat-Trimerisierung (Isocyanurat-Bildung), Isocyanat-Isocyanat mit $CO_2$-Abspaltung (Carbodiimid-Bildung) und/oder Isocyanat-Amin (Harnstoff-Bildung) und/oder "sekundäre" Vernetzungsreaktionen wie Isocyanat-Urethan (Allophanat-Bildung) und/oder Isocyanat-Harnstoff (Biuret-Bildung) und/oder Isocyanat-Carbodiimid (Uretonimin-Bildung) eingesetzt werden.

Geeignete Katalysatoren im Sinne der vorliegenden Erfindung sind beispielsweise Substanzen, die eine der vorgenannten Umsetzungen, insbesondere die Gelreaktion (Isocyanat-Polyol), die Treibreaktion (Isocyanat-Wasser) und/oder die Di- bzw. Trimerisierung des Isocyanats katalysieren. Solche Katalysatoren sind vorzugsweise stickstoffhaltige Verbindungen, insbesondere Amine und Ammonium-Salze, und/oder metallhaltige Verbindungen.

Geeignete stickstoffhaltige Verbindungen als Katalysatoren, im Folgenden auch als stickstoffhaltige Katalysatoren bezeichnet, im Sinne der vorliegenden Erfindung sind alle stickstoffhaltigen Verbindungen nach dem Stand der Technik, die eine der oben genannten Isocyanat-Reaktionen katalysieren und/oder zur Herstellung von Polyurethanen, insbesondere von Polyurethanschaumstoffen eingesetzt werden können.

Beispiele für geeignete stickstoffhaltige Verbindungen als Katalysatoren im Sinne der vorliegenden Erfindung sind bevorzugt Amine, insbesondere tertiäre Amine oder Verbindungen enthaltend eine oder mehrere tertiäre Amin-Gruppen, wie unter anderem die Amine Triethylamin, N,N-Dimethylcyclohexylamin, N,N-Dicyclohexylmethylamin, N,N-Dimethylaminoethylamin, N,N,N',N'-Tetramethylethylen-1,2-diamin, N,N,N',N'-Tetra-methylpropylen-1,3-diamin, N,N,N',N'-Tetramethyl-1,4-butandiamin, N,N,N',N'-Tetramethyl-1,6-hexandiamin, N,N,N',N",N"-Pentamethyldiethylentriamin, N,N,N'-Trimethylaminoethyl-ethanolamin, N,N-Dimethylaminopropylamin, N,N-Diethylaminopropylamin, N,N-Dimethylaminopropyl-N',N'-dipropan-2-olamin, 2-[[3-(dimethylamino)propyl]methylamino]ethanol, 3-(2-Dimethylamino)ethoxy)propylamin, N,N-Bis[3-(dimethylamino)propyl]-amin, N,N,N',N",N"-Pentamethyldipropylentriamin, 1-[Bis[3-(dimethylamino)propyl]amino]-2-propanol, N,N-Bis[3-(dimethylamino)propyl]-N',N'-dimethylpropan-1,3-diamin, Triethylendiamin, 1,4-Diazabicyclo-[2.2.2]octane-2-methanol, N,N'-Dimethylpiperazin, 1,2-Dimethylimidazol, N-(2-Hydroxypropyl)imidazol, 1-Isobutyl-2-methylimidazol, N-(3-Aminopropyl)imidazol, N-Methylimidazol, N-Ethylmorpholin, N-Methylmorpholin, 2,2,4-Trimethyl-2-silamorpholin, N-Ethyl-2,2-dimethyl-2-silamorpholin, N-(2-Aminoethyl)morpholin, N-(2-Hydroxyethyl)morpholin, 2,2'-Dimorpholinodiethylether, N,N'-Dimethylpiperazin, N-(2-Hydroxyethyl)piperazin, N-(2-Aminoethyl)piperazin, N,N-Dimethylbenzylamin, N,N-Dimethylaminoethanol, N,N-Diethylaminoethanol, 3-Dimethyl-amino-1-propanol, N,N-Dimethylaminoethoxyethanol, N,N-Diethylaminoethoxyethanol, Bis(2-Dimethylaminoethylether), N,N,N'-Trimethyl-N'-(2-hydroxyethyl)bis(2-aminoethyl)ether, N,N,N'-Trimethyl-N-3'-aminopropyl(bisaminoethyl)ether, Tris(dimethylaminopropyl)-hexahydro-1,3,5-triazin, 1,8-Diazabicyclo[5.4.0]undec-7-en, 1,5-Diazabicyclo[4.3.0]non-5-en, 1,5,7-triazabicyclo[4.4.0]dec-5-en, N-Methyl-1,5,7-triazabicyclo[4.4.0]dec-5-en, 1,4,6-triaza-bicyclo[3.3.0]oct-4-en, 1,1,3,3-Tetramethylguanidin, tert-Butyl-1,1,3,3-Tetramethylguanidin, Guanidin, 3-Dimethylaminopropylharnstoff, 1,3-Bis[3-(dimethylamino)propyl]harnstoff, Bis-N,N-(dimethylaminoethoxyethyl)isophorondicarbamat, 3-Dimethylamino-N,N-dimethylpropionamid und 2,4,6-Tris(dimethylaminomethyl)phenol. Geeignete stickstoffhaltige Katalysatoren, nach dem Stand der Technik, können zum Beispiel von der Firma Evonik unter dem Handelsnamen TEGOAMIN® bezogen werden.

Je nach Anwendung kann es bevorzugt sein, dass bei der erfindungsgemäßen Herstellung von viskoelastischen

Polyurethanschaumstoffen, quaternisierte und/oder protonierte stickstoffhaltige Katalysatoren, insbesondere quaternisierte und/oder protonierte tertiäre Amine, eingesetzt werden.

Zur möglichen Quaternisierung stickstoffhaltiger Katalysatoren können alle als Quaternisierungsreagenz bekannten Reagenzien eingesetzt werden. Vorzugsweise werden als Quaternisierungsmittel Alkylierungsmittel, wie z. B. Dimethylsulfat, Methylchlorid oder Benzylchlorid, bevorzugt Methylierungsmittel wie insbesondere Dimethylsulfat verwendet. Ebenso kann mit Alkylenoxiden wie zum Beispiel Ethylenoxid, Propylenoxid oder Butylenoxid, vorzugsweise mit anschließender Neutralisation mit anorganischen oder organischen Säuren, quaternisiert werden.

Stickstoffhaltige Katalysatoren können, sofern quaternisiert, einfach oder mehrfach quaternisiert sein. Vorzugsweise sind die stickstoffhaltigen Katalysatoren nur einfach quaternisiert. Bei einfacher Quaternisierung sind die stickstoffhaltigen Katalysatoren vorzugsweise an einem tertiären Stickstoffatom quaternisiert.

Stickstoffhaltige Katalysatoren können durch Umsetzung mit organischen oder anorganischen Säuren in die entsprechenden protonierten Verbindungen überführt werden. Diese protonierten Verbindungen können z.B. bevorzugt sein, wenn z.B. eine verlangsamte Polyurethan-Reaktion erzielt werden soll oder wenn das Reaktionsgemisch bei der Anwendung ein verbessertes Fließverhalten haben soll.

Als organische Säuren können zum Beispiel alle nachfolgend genannten organischen Säuren, beispielsweise Carbonsäuren mit 1 bis 36 Kohlenstoffatomen (aromatisch oder aliphatisch, linear oder verzweigt), beispielsweise Ameisensäure, Milchsäure, 2-Ethylhexansäure, Salicylsäure und Neodecansäure, oder auch polymere Säuren wie z.B. Polyacryl- oder Polymethacrylsäuren eingesetzt werden. Als anorganische Säuren können z.B. Phosphorbasierende Säuren, Schwefel-basierende Säuren oder Bor-basierende Säuren eingesetzt werden.

Der Einsatz stickstoffhaltigen Katalysatoren, die nicht quaternisiert oder protoniert sind, ist im Sinne dieser Erfindung allerdings besonders bevorzugt.

Geeignete metallhaltige Verbindungen als Katalysatoren, im Folgenden auch als metallhaltige Katalysatoren bezeichnet, im Sinne der vorliegenden Erfindung sind alle metallhaltigen Verbindungen nach dem Stand der Technik, die eine der oben genannten Isocyanat-Reaktionen katalysieren und/oder zur Herstellung von Polyurethanen, insbesondere von Polyurethanschaumstoffen eingesetzt werden können. Sie können zum Beispiel ausgewählt werden aus der Gruppe der metallorganischen oder organometallischen Verbindungen, metallorganischen oder organometallischen Salze, organischen Metallsalze, anorganischen Metallsalze sowie aus der Gruppe der geladenen oder ungeladenen metallhaltigen Koordinationsverbindungen, insbesondere der Metall-Chelat-Komplexe.

Der Ausdruck "metallorganische oder organometallische Verbindungen" umfasst im Sinne dieser Erfindung insbesondere den Einsatz metallhaltiger Verbindungen, die über eine direkte Kohlenstoff-Metall-Bindung verfügen, hier auch als Metallorganyle (z.B. Zinnorganyle) oder organometallische bzw. Organometall-Verbindungen (z.B. Organozinn-Verbindungen) bezeichnet. Der Ausdruck "organometallische oder metallorganische Salze" umfasst im Sinne dieser Erfindung insbesondere den Einsatz von metallorganischen oder organometallischen Verbindungen mit Salzcharakter, das heißt Ionenverbindungen, bei denen entweder das Anion oder Kation von metallorganischer Natur ist (z.B. Organozinn-Oxide, Organozinn-Chloride oder Organozinn-Carboxylate). Der Ausdruck "organische Metallsalze" umfasst im Sinne dieser Erfindung insbesondere den Einsatz von metallhaltigen Verbindungen, die über keine direkte Kohlenstoff-Metall-Bindung verfügen und gleichzeitig Metallsalze sind, bei denen entweder das Anion oder das Kation eine organische Verbindung ist (z.B. Zinn(II)-Carboxylate). Der Ausdruck "anorganische Metallsalze" umfasst im Sinne dieser Erfindung insbesondere den Einsatz von metallhaltigen Verbindungen oder von Metallsalzen, bei denen weder Anion noch Kation eine organische Verbindung ist, z.B. Metall-Chloride (z.B. Zinn(II)-Chlorid), reine oder gemischte, also mehrere Metalle enthaltende, Metall-Oxide (z.B. Zinn-Oxide) und/oder Metall-Silicate oder -Alumosilicate. Der Ausdruck "Koordinationsverbindung" umfasst im Sinne dieser Erfindung insbesondere den Einsatz von metallhaltigen Verbindungen, die aus einem oder mehreren Zentralteilchen und einem oder mehreren Liganden aufgebaut sind, wobei die Zentralteilchen geladene oder ungeladene Metalle sind (z.B. Metall- bzw. Zinn-Amin-Komplexe). Der Ausdruck "Metall-Chelat-Komplexe" umfasst im Sinne dieser Erfindung insbesondere den Einsatz von metallhaltigen Koordinationsverbindungen, die Liganden mit mindestens zwei Koordinations- oder Bindungsstellen zum Metallzentrum aufweisen (z.B. Metall- bzw. Zinn-Polyamin- oder Metall- bzw. Zinn-Polyether-Komplexe).

Geeignete metallhaltige Verbindungen, insbesondere wie oben definiert, als zusätzliche Katalysatoren im Sinne der vorliegenden Erfindung können zum Beispiel ausgewählt werden aus allen metallhaltigen Verbindungen enthaltend Lithium, Natrium, Kalium, Magnesium, Calcium, Scandium, Yttrium, Titan, Zirconium, Vanadium, Niob, Chrom, Molybdän, Wolfram, Mangan, Cobalt, Nickel, Kupfer, Zink, Quecksilber, Aluminium, Gallium, Indium, Germanium, Zinn, Blei, und/oder Bismuth, insbesondere Natrium, Kalium, Magnesium, Calcium, Titan, Zirconium, Molybdän, Wolfram, Zink, Aluminium, Zinn und/oder Bismuth, besonders bevorzugt Zinn, Bismuth, Zink und/oder Kalium.

Geeignete metallorganische Salze und organische Metallsalze, wie oben definiert, als Katalysatoren im Sinne der vorliegenden Erfindung sind zum Beispiel Organozinn-, Zinn-, Zink-, Bismuth und Kalium-Salze, insbesondere entsprechende Metall-Carboxylate, - Alkoholate, -Thiolate und -Mercaptoacetate, wie zum Beispiel Dibutylzinndiacetat, Dimethylzinndilaurat, Dibutylzinndilaurat (DBTDL), Dioctylzinndilaurat (DOTDL), Dimethylzinndineodecanoat, Dibutylzinndineodecanoat, Dioctylzinndineodecanoat, Dibutylzinndioleat, Dibutylzinn-bis-n-laurylmercaptid, Dimethylzinn-bis-n-laurylmercaptid, Monomethylzinn-tris-2-ethylhexylmercaptoacetat, Dimethylzinn-bis-2-ethylhexylmercapto-acetat, Dibutylzinn-bis-2-ethylhexylmercaptoacetat, Dioctylzinn-bis-isooctylmercaptoacetat, Zinn(II)-acetat, Zinn(II)-2-ethylhexanoat (Zinn(II)-octoat), Zinn(II)-isononanoat (Zinn(II)-3,5,5-trimethylhexanoat), Zinn(II)-neodecanoat, Zinn(II)-ricinoleat, Zinn(II)-oleat, Zink(II)-acetat, Zink(II)-2-ethylhexanoat(Zink(II)-octoat), Zink(II)-isononanoat(Zink(II)-3,5,5-trimethylhexanoat), Zink(II)-neodecanoat, Zink(II)-ricinoleat, Bismuthacetat, Bismuth-2-ethylhexanoat, Bismuthoctoat, Bismuthisononanoat, Bismuthneodecanoat, Kaliumformiat, Kaliumacetat, Kalium-2-ethylhexanoat (Kaliumoctoat), Kalium-isononanoat, Kaliumneodecanoat und/oder Kaliumricinoleat.

Bei der erfindungsgemäßen Herstellung von viskoelastischen Polyurethanschaumstoffen, kann es bevorzugt sein, die Verwendung von metallorganischen Salzen wie zum Beispiel von Dibutylzinndilaurat auszuschließen.

Geeignete zusätzliche metallhaltige Katalysatoren werden in der Regel vorzugsweise so ausgewählt, dass sie keinen störenden Eigengeruch aufweisen, toxikologisch im Wesentlichen unbedenklich sind und dass die resultierenden Polyurethansysteme, insbesondere Polyurethanschäume möglichst geringe Katalysator-bedingte Emissionen aufweisen.

Bei der erfindungsgemäßen Herstellung von viskoelastischen Polyurethanschaumstoffen, kann es je nach Art der Anwendung, bevorzugt sein, einbaubare/reaktive oder hochmolekulare Katalysatoren zu verwenden. Solche Katalysatoren können zum Beispiel ausgewählt werden aus der Gruppe der metallhaltigen Verbindungen, vorzugsweise aus der Gruppe der Zinn-, Zink-, Bismuth- und/oder Kalium-haltigen Verbindungen, insbesondere aus der Gruppe der Metall-Carboxylate der vorgenannten Metalle wie zum Beispiel die Zinn-, Zink-, Bismuth- und/oder Kaliumsalze der Isononansäure, Neodecansäure, Ricinolsäure und/oder Ölsäure, und/oder aus der Gruppe der stickstoffhaltigen Verbindungen, insbesondere aus der Gruppe der emissionsarmen Amine und/oder der emissionsarmen Verbindungen enthaltend eine oder mehrere tertiäre Amine-Gruppen, beispielsweise beschrieben durch die Amine Dimethylaminoethanol, N,N-Dimethyl-N',N'-di(2-hydroxypropyl)-1,3-diaminopropan, N,N-Dimethylaminopropylamin, N,N,N'-Trimethyl-N'-hydroxyethyl-bis(aminoethyl)ether, 6-Dimethylaminoethyl-1-hexanol, N-(2-Hydroxypropyl)imidazol, N-(3-Amino-propyl)imidazol, Aminopropyl-2-methylimidazol, N,N,N'-Trimethylaminoethanolamin, 2-(2-(N,N-Dimethylaminoethoxy)ethanol, N-(Dimethyl-3-aminopropyl)harnstoff-derivate und Alkylaminooxamide, wie Bis-(N-(N',N'-dimethylaminopropyl))oxamid, Bis-(N-(N',N'-dimethylaminoethyl))-oxamid, Bis-(N-(N', N'-Imidazolidinylpropyl)oxamid, Bis-(N-(N',N'-diethylaminoethyl))-oxamid, Bis-(N-(N',N'-diethylaminopropyl)oxamid, Bis-(N-(N',N'-diethylaminoethyl)oxamid, Bis-(N-(N',N'-diethylimino-1-methylpropyl)oxamid, Bis-(N-(3-Morpholinopropylyl)-oxamid und deren Umsetzungsprodukte mit Alkylenoxiden, vorzugsweise mit einem Molgewicht im Bereich zwischen 160 und 500 g/mol, sowie Verbindungen der allgemeine Formel:

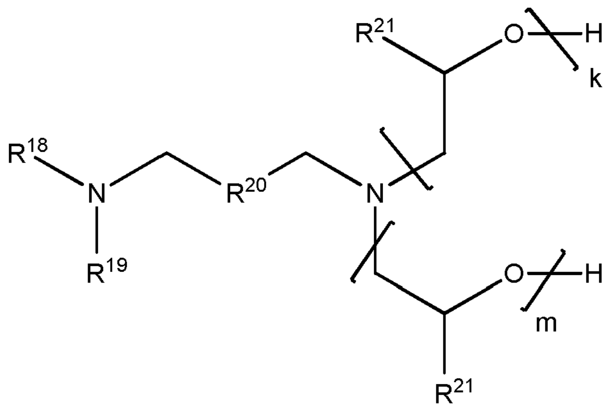

Mit

$R^{18}$, $R^{19}$ = $-C_aH_{2a+i}$ mit a = 1 - 4 für acylische Gruppen

$R^{18}$, $R^{19}$ = $-C_bH_cN_d-$ mit b = 3 - 7, c = 6 - 14, d = 0 - 2 für cyclische Gruppen

$R^{20}$ = $C_eH_fO_9$ mit e = 0 - 4, f = 0 - 8, g = 0 - 2

$R^{21}$ = -H, $-CH_3$, $-C_2H_5$

k, m = gleich oder verschieden 1 - 5.

Derartige Katalysatoren und/oder Mischungen werden beispielsweise unter dem Namen Jeffcat® ZF-10, Lupragen® DMEA, Lupragen® API, Toyocat® RX 20 und Toyocat® RX 21 , DABCO® RP 202, DABCO® RP 204, DABCO®

NE 300, DABCO® NE 310, DABCO® NE 400, DABCO® NE 500, DABCO® NE 600, DABCO® NE 1060 und DABCO® NE 2039, Niax® EF 860, Niax® EF 890, Niax® EF 700, Niax® EF 705, Niax® EF 708, Niax® EF 600, Niax® EF 602, Kosmos® 54, Kosmos® EF, und Tegoamin® ZE 1 im Handel angeboten.

Geeignete Einsatzmengen an Katalysatoren richten sich nach dem Typ des Katalysators und liegen vorzugsweise im Bereich von 0,005 bis 10,0 pphp, besonders bevorzugt im Bereich von 0,01 bis 5,00 pphp (= Gewichtsteile bezogen auf 100 Gewichtsteile Polyol) bzw. 0,10 bis 10,0 pphp für Kaliumsalze.

Je nach Anwendung kann es bevorzugt sein, dass bei der erfindungsgemäßen Herstellung von viskoelastischen Polyurethanschaumstoffen, ein oder mehrere stickstoffhaltige und/oder metallhaltige Katalysatoren eingesetzt werden. Wenn mehr als ein Katalysator eingesetzt wird, können die Katalysatoren in beliebigen Gemischen untereinander eingesetzt werden. Hierbei können die Katalysatoren einzeln während der Verschäumung, zum Beispiel im Sinne einer Vordosierung im Mischkopf, und/oder als vorgemischte Katalysatorkombination eingesetzt werden.

Der Ausdruck "vorgemischte Katalysatorkombination", im Folgenden auch als Katalysatorkombination bezeichnet, umfasst im Sinne dieser Erfindung insbesondere fertige Mischungen von metallhaltigen Katalysatoren und/oder stickstoffhaltigen Katalysatoren und/oder entsprechenden protonierten und/oder quaternisierten stickstoffhaltigen Katalysatoren sowie optional noch weiterer Inhalts- oder Zusatzstoffen wie zum Beispiel Wasser, organischen Lösungsmittelen, Säuren zur Blockierung der Amine, Emulgatoren, Tenside, Treibmitteln, Antioxidantien, Flammschutzmittel, Stabilisatoren und/oder Siloxanen, vorzugsweise Polyethersiloxanen, die bereits vor der Verschäumung als solche vorliegen und während der Verschäumungsvorgangs nicht als Einzelkomponenten zugegeben werden müssen.

Je nach Anwendung kann es bevorzugt sein, wenn aus der Summe aller eingesetzten stickstoffhaltigen Katalysatoren, gegenüber der Summe der metallhaltigen Katalysatoren, insbesondere Kalium-, Zink- und/oder Zinn-Katalysatoren, ein molares Mengenverhältnis von 1:0,05 bis 0,05:1, vorzugsweise 1:0,07 bis 0,07:1 und besonders bevorzugt 1:0,1 bis 0,1:1 resultiert.

Um eine Reaktion der Komponenten untereinander zu vermeiden, insbesondere Reaktion von stickstoffhaltigen Katalysatoren mit metallhaltigen Katalysatoren, insbesondere Kalium-, Zink- und/oder Zinn-Katalysatoren, kann es bevorzugt sein, diese Komponenten getrennt voneinander zu lagern und dann der Isocyanat- und Polyol-Reaktionsmischung gleichzeitig oder nacheinander zuzuführen.

Ein weiterer Gegenstand der vorliegenden Erfindung ist ein Verfahren zur Herstellung von viskoelastischem Polyurethanschaum, durch Umsetzung von Polyolmischungen mit mindestens einer Isocyanatkomponente in Gegenwart eines oder mehrerer Katalysatoren, die die Reaktionen Isocyanat-Polyol und/oder Isocyanat-Wasser und/oder die Isocyanat-Trimerisierung katalysieren, wobei die Umsetzung in Gegenwart eines Siloxans der Formel (I) durchgeführt wird, wobei die insgesamt eingesetzte Polyolkomponente eine durchschnittliche Hydroxylzahl, bestimmt nach DIN 53240-1:2012-07, von 57 - 300 mg KOH/g aufweist, und wobei die Herstellung des PUR-Schaumes bei einem Isocyanat-Index von 65 bis 108 erfolgt. Bezüglich bevorzugter Ausführungsformen des erfindungsgemäßen Verfahrens sei explizit auf die vorangegangene Beschreibung verwiesen. Die dort genannten bevorzugten Ausführungsformen gelten analog für das eben genannte Verfahren zur Herstellung von Polyurethan-Schaum.

Mittels des erfindungsgemäßen Verfahrens ist ein viskoelastischer Polyurethan(weich)schaum erhältlich. Dieser Polyurethanschaum entspricht einem weiteren Gegenstand der Erfindung. Der betreffende Polyurethanschaum zeichnet sich insbesondere dadurch aus, dass der zur Herstellung verwendete Zellöffner auf unterbrochenen Siloxanblockpolymeren basiert, entsprechend den Siloxanen der Formel (I).

Bevorzugte erfindungsgemäß erhältliche Polyurethanschäume sind solche, bei denen zwei oder mehr der weiter oben genannten bevorzugten Parameter (Rückprallelastizität, Dichte, Porenstruktur, Druckspannung, Zellstruktur), vorzugsweise alle der oben genannten Parameter erfüllt sind.

Ein weiterer Gegenstand der Erfindung ist eine Zusammensetzung, geeignet zur Herstellung von viskoelastischem Polyurethanschaum, umfassend Polyolmischungen, enthaltend mindestens ein Polyol mit einer Hydroxylzahl > 100 mg KOH/g, di- oder polyfunktionelles Isocyanat, Siloxan gemäß Formel (I), Aminkatalysator, metallhaltige Katalysatoren, wie vorzugsweise Kalium-, Zink- und/oder Zinn-organischer-Verbindungen, Stabilisator, Treibmittel, wie vorzugsweise Wasser, ggf. Hilfsmittel, wie vorzugsweise physikalische Treibmitteln, Flammschutzmittel, Antioxidantien, UV-Stabilisatoren, Farbpasten, Biozide, Füllstoffe und/oder Vernetzer, wobei das insgesamt enthaltene Polyol eine durchschnittliche Hydroxylzahl, bestimmt nach DIN 53240-1:2012-07, von 57 - 300 mg KOH/g aufweist. Eine solche Zusammesetzung ermöglicht den einfachen Zugang zu den erfindungsgemäß angestrebten Polyurethanschaum.

Eine bevorzugte Zusammensetzung umfasst Polyol in Mengen von 25 bis 80 Gew.-%, Wasser in Mengen von 1 bis 5 Gew.-%, Katalysator in Mengen von 0,01 bis 1 Gew.-%, physikalisches Treibmittel in Mengen von 0 bis 50 Gew.-%, Stabilisatoren, wie vorzugsweise. Si-haltige und nicht Si-haltige, insbesondere Si-haltige und nicht Si-haltige organische Stabilisatoren und Tenside, in Mengen bis zu 5 Gew.-%, z.B. 0,001 bis 5 Gew.-%, Isocyanat in Mengen von 20 bis 60 Gew.% sowie Siloxan nach Formel (I) in Mengen von 0,001 bis 10 Gew.-%, vorzugsweise 0,1 bis 5 Gew-%.

Bezüglich weiterer bevorzugter Ausführungsformen der eben genannten Zusammensetzung sei explizit auf die vorangegangene Beschreibung verwiesen. Die dort genannten bevorzugten Ausführungsformen gelten analog für die eben genannte Zusammensetzung.

Mit dem erfindungsgemäßen Polyurethanschaum sind Artikel zugänglich die diesen Polyurethanschaum enthalten oder aus ihm bestehen. Diese Artikel stellen einen weiteren Gegenstand dieser Erfindung dar. Solche Artikel können z. B. Möbelpolster oder Matratzen sein.

Ein weiterer Gegenstand dieser Erfindung ist außerdem ein viskoelastischer Polyurethanschaum, enthaltend die Umsetzungsprodukte einer oder mehrerer Polyolkomponenten, mit einer oder mehrerer Isocyanatkomponenten, wobei als Zellöffner ein Siloxan der Formel (I), wie oben genau beschrieben, fungierte.

Ein weiterer Gegenstand der Erfindung ist die Verwendung des erfindungsgemäßen Polyurethanschaums als Verpackungsschaum, Matratze, Möbelpolster, Werkstoff in Kraftfahrzeuginnenräumen, Automobil-Sitzpolster, Kopfstütze, Automobil-Innenverkleidung, Schallabsorptionsmaterial, Schuhsole, Teppichrückseitenschaum, Filterschaum, oder zur Herstellung entsprechender Produkte, insbesondere als Werkstoff in Kraftfahrzeuginnenräumen. Besonders bevorzugt ist die Verwendung als Matratze, Möbelpolster, Werkstoff in Kraftfahrzeuginnenräumen, Automobil-Sitzpolster, Kopfstütze, Schallabsorptionsmaterial, oder zur Herstellung entsprechender Produkte, insbesondere als Werkstoff in Kraftfahrzeuginnenräumen.

Weitere Gegenstände der Erfindung liegen in der Verwendung von Siloxan der Formel (I) zur Herstellung von viskoelastischem Polyurethan-Schaum mit verminderten Emissionen, sowie zur Herstellung von geruchsarmen viskoelastischem Polyurethan-Schaum, sowie zur Verhinderung von Schrumpf bei der Herstellung von viskoelastischem Polyurethan-Schaum, sowie zur Herstellung von viskoelastischem Polyurethan-Schaum mit besonders feiner Zellstruktur, sowie zur Herstellung von viskoelastischen Polyurethanschäumen mit verbesserten Brandeigenschaften Auch für die vorgenannten Gegenstände sei mit Blick auf bevorzugte Ausgestaltungen auf die vorausgegangene Beschreibung verwiesen.

Der Gegenstand der vorliegenden Erfindung wird nachfolgend an Hand von Beispielen näher erläutert.

**Beispiele**

**Herstellung der erfindungsgemäßen Additive**

Beispiel 1 (erfindungsgemäß)

In einen 1-L-Dreihalskolben mit Intensivkühler und KPG-Rührer wurden 200 g eines Siloxans der allgemeinen Formel $Me_3SiO[SiMe_2O]_{91}[SiHMeO]_7SiMe_3$ zusammen mit 346 g eines Polyethers der allgemeinen Formel $CH_2=CHCH_2O[CH_2CH_2O]_{14}[CH_2CH(CH_3)O]_{14}H$, 1,1 g 1,7-Octadien und 234 g Toluol vorgelegt. Die Mischung wurde auf 90 °C geheizt und mit 0,39 g einer 2 %igen Lösung des Karstedt-Katalysators in Toluol versetzt. Es setzte eine exotherme Reaktion ein. Das Reaktionsgemisch wurde anschließend vier Stunden lang bei 90 °C gerührt. Nach dieser Reaktionszeit waren die SiH-Funktionen vollständig umgesetzt. Danach wurde das Toluol destillativ am Rotationsverdampfer entfernt und es wurden 547 g eines Polyethers der allgemeinen Formel $C_4H_9O[CH_2CH_2O]_8[CH_2CH(CH_3)O]_8H$ eingerührt.

Beispiel 2 (erfindungsgemäß)

In einen 1-L-Dreihalskolben mit Intensivkühler und KPG-Rührer wurden 200 g eines Siloxans der allgemeinen Formel $Me_3SiO[SiMe_2O]_{91}[SiHMeO]_7SiMe_3$ zusammen mit 349 g eines Polyethers der allgemeinen Formel $CH_2=CHCH_2O[CH_2CH_2O]_{14}[CH_2CH(CH_3)O]_{14}CH_3$, 1,1 g 1,7-Octadien und 234 g Toluol vorgelegt. Die Mischung wurde auf 90 °C geheizt und mit 0,39 g einer 2 %igen Lösung des Karstedt-Katalysators in Toluol versetzt. Es setzte eine exotherme Reaktion ein. Das Reaktionsgemisch wurde anschließend vier Stunden lang bei 90 °C gerührt. Nach dieser Reaktionszeit waren die SiH-Funktionen vollständig umgesetzt. Danach wurde das Toluol destillativ am Rotationsverdampfer entfernt und es wurden 548 g eines Polyethers der allgemeinen Formel $C_4H_9O[CH_2CH_2O]_8[CH_2CH(CH_3)O]_8H$ eingerührt.

Beispiel 3 (erfindungsgemäß)

In einen 1-L-Dreihalskolben mit Intensivkühler und KPG-Rührer wurden 200 g eines Siloxans der allgemeinen Formel $Me_3SiO[SiMe_2O]_{91}[SiHMeO]_7SiMe_3$ zusammen mit 230 g eines Polyethers der allgemeinen Formel $CH_2=CHCH_2O[CH_2CH_2O]_{14}[CH_2CH(CH_3)O]_{14}H$, 95 g eines Polyethers der allgemeinen Formel $CH_2=CHCH_2O[CH_2CH_2O]_8[CH_2CH(CH_3)O]_{14}H$, 1,1 g 1,7-Octadien und 225 g Toluol vorgelegt. Die Mischung wurde auf 90 °C geheizt und mit 0,39 g einer 2 %igen Lösung des Karstedt-Katalysators in Toluol versetzt. Es setzte eine exotherme Reaktion ein. Das Reaktionsgemisch wurde anschließend vier Stunden lang bei 90 °C gerührt. Nach dieser Reaktionszeit waren die SiH-Funktionen vollständig umgesetzt. Danach wurde das Toluol destillativ am Rotationsverdampfer entfernt und es wurden 526 g eines Polyethers der allgemeinen Formel $C_4H_9O[CH_2CH_2O]_8[CH_2CH(CH_3)O]_8H$

eingerührt.

Beispiel 4 (erfindungsgemäß)

In einen 1-L-Dreihalskolben mit Intensivkühler und KPG-Rührer wurden 200 g eines Siloxans der allgemeinen Formel $Me_2SiHO[SiMe_2O]_{83}[SiHMeO]_5SiHMe_2$ zusammen mit 256 g eines Polyethers der allgemeinen Formel $CH_2=CHCH_2O[CH_2CH_2O]_{14}[CH_2CH(CH_3)O]_{14}H$, 105 g eines Polyethers der allgemeinen Formel $CH_2=CHCH_2O[CH_2CH_2O]_8[CH_2CH(CH_3)O]_{14}H$, 1,2 g 1,7-Octadien und 241 g Toluol vorgelegt. Die Mischung wurde auf 90 °C geheizt und mit 0,40 g einer 2 %igen Lösung des Karstedt-Katalysators in Toluol versetzt. Es setzte eine exotherme Reaktion ein. Das Reaktionsgemisch wurde anschließend vier Stunden lang bei 90 °C gerührt. Nach dieser Reaktionszeit waren die SiH-Funktionen vollständig umgesetzt. Danach wurde das Toluol destillativ am Rotationsverdampfer entfernt und es wurden 562 g eines Polyethers der allgemeinen Formel $C_4H_9O[CH_2CH_2O]_8[CH_2CH(CH_3)O]_8H$ eingerührt.

Beispiel 5 (erfindungsgemäß)

In einen 2-L-Dreihalskolben mit Intensivkühler und KPG-Rührer wurden 200 g eines Siloxans der allgemeinen Formel $Me_3SiO[SiMe_2O]_{60}[SiHMeO]_5SiMe_3$ zusammen mit 359,7 g eines Polyethers der allgemeinen Formel $CH_2=CHCH_2O[CH_2CH_2O]_{14}[CH_2CH(CH_3)O]_{14}H$, 2,9 g 1,3-Divinyltetramethyldisiloxan und 563 g Toluol vorgelegt. Die Mischung wurde auf 90 °C geheizt und mit 0,56 g einer 2 %igen Lösung des Karstedt-Katalysators in Toluol versetzt. Es setzte eine exotherme Reaktion ein. Das Reaktionsgemisch wurde anschließend vier Stunden lang bei 90 °C gerührt. Nach dieser Reaktionszeit waren die SiH-Funktionen vollständig umgesetzt.

Beispiel 6 (erfindungsgemäß)

In einen 1-L-Dreihalskolben mit Intensivkühler und KPG-Rührer wurden 200 g eines Siloxans der allgemeinen Formel $Me_3SiO[SiMe_2O]_{91}[SiHMeO]_7SiMe_3$ zusammen mit 346 g eines Polyethers der allgemeinen Formel $CH_2=CHCH_2O[CH_2CH_2O]_{14}[CH_2CH(CH_3)O]_{14}H$, 2,2 g $CH_2=CHCH_2O[CH_2CH_2O]_3CH_2CH=CH_2$ und 235 g Toluol vorgelegt. Die Mischung wurde auf 90 °C geheizt und mit 0,39 g einer 2 %igen Lösung des Karstedt-Katalysators in Toluol versetzt. Es setzte eine exotherme Reaktion ein. Das Reaktionsgemisch wurde anschließend vier Stunden lang bei 90 °C gerührt. Nach dieser Reaktionszeit waren die SiH-Funktionen vollständig umgesetzt. Danach wurde das Toluol destillativ am Rotationsverdampfer entfernt und es wurden 548 g eines Polyethers der allgemeinen Formel $C_4H_9O[CH_2CH_2O]_8[CH_2CH(CH_3)O]_8H$ eingerührt.

Beispiel 7 (Nicht erfindungsgemäß)

In einen 1-L-Dreihalskolben mit Intensivkühler und KPG-Rührer wurden 200 g eines Siloxans der allgemeinen Formel $Me_3SiO[SiMe_2O]_{91}[SiHMeO]_7SiMe_3$ zusammen mit 384 g eines Polyethers der allgemeinen Formel $CH_2=CHCH_2O[CH_2CH_2O]_{14}[CH_2CH(CH_3)O]_{14}H$ und 250 g Toluol vorgelegt. Die Mischung wurde auf 90 °C geheizt und mit 0,42 g einer 2 %igen Lösung des Karstedt-Katalysators in Toluol versetzt. Es setzte eine exotherme Reaktion ein. Das Reaktionsgemisch wurde anschließend vier Stunden lang bei 90 °C gerührt. Nach dieser Reaktionszeit waren die SiH-Funktionen vollständig umgesetzt. Danach wurde das Toluol destillativ am Rotationsverdampfer entfernt und es wurden 586 g eines Polyethers der allgemeinen Formel $C_4H_9O[CH_2CH_2O]_8[CH_2CH(CH_3)O]_8H$ eingerührt.

**Herstellung der Polyurethanschäume**

Bei den anwendungstechnischen Tests wurden vier typische Formulierungen für viskoelastische Polyurethanschäume, die sich wie folgt zusammensetzen, verwendet:

Tabelle 1: Formulierung I für viskoelastische TDI80-Weichblockschaum-Anwendungen

| **Formulierung I** | **Massenteile (pphp)** |
|---|---|
| Voranol® CP 755[1)] | 70 |
| Voranol® CP 3322[2)] | 30 |
| Voranol® CP 1421[3)] | 7 |
| Desmodur® T 80[4)] Index <85> | 40,3 |

(fortgesetzt)

| **Formulierung I** | **Massenteile (pphp)** |
|---|---|
| Wasser | 1,95 |
| TEGOAMIN® 33[5)] | 0,3 |
| TEGOAMIN® BDE[5)] | 0,2 |
| TEGOAMIN® DMEA[5)] | 0,2 |
| KOSMOS® 29[6)] | 0,07 |
| TEGOSTAB® BF 2470[7)] | 1,0 |
| Additiv[8)] | variabel |

1) erhältlich bei der Firma Dow Chemical, hierbei handelt es sich um ein Glycerin-basiertes Polyetherpolyol mit einer OH-Zahl von 235 mg KOH/g.
2) erhältlich bei der Firma Dow Chemical, hierbei handelt es sich um ein Glycerin-basiertes Polyetherpolyol mit einer OH-Zahl von 48 mg KOH/g.
3) erhältlich bei der Firma Dow Chemical, hierbei handelt es sich um ein Polyetherpolyol mit einer OH-Zahl von 33 mg KOH/g.
4) Toluylendiisocyanat T 80 (80 % 2,4-Isomer, 20 % 2,6-Isomer) der Firma Bayer Material Science, 3 mPa·s, 48 % NCO, Funktionalität 2.
5) Amin-Katalysator der Firma Evonik Industries AG.
6) Zinnkatalysator, erhältlich bei der Firma Evonik Industries AG: Zinn(II)-Salz der 2-Ethylhexansäure.
7) Polyethermodifiziertes Polysiloxan, erhältlich bei der Firma Evonik Industries AG.
8) Als Zellöffner werden die in den Beispielen 1 - 6 beschriebenen, erfindungsgemäßen Additive, das in Beispiel 7 beschriebene, nicht erfindungsgemäße Additiv sowie Niax® L626 und Niax® L627 der Firma Momentive Performance Materials verwendet.

Tabelle 2: Formulierung II für viskoelastische TDI80-Weichblockschaum-Anwendungen

| **Formulierung II** | **Massenteile (pphp)** |
|---|---|
| Voralux® HT 762[9)] | 90 |
| Voranol® CP 1421[3)] | 10 |
| Desmodur® T 80[4)] Index <90> | 39,1 |
| Wasser | 1,5 |
| TEGOAMIN® 33[5)] | 0,3 |
| TEGOAMIN® BDE[5)] | 0,15 |
| KOSMOS® 29[6)] | 0,04 |
| TEGOSTAB® BF 2470[7)] | 0,5 |
| Additiv [8)] | variabel |

3) erhältlich bei der Firma Dow Chemical, hierbei handelt es sich um ein Polyetherpolyol mit einer OH-Zahl von 33 mg KOH/g.
4) Toluylendiisocyanat T 80 (80 % 2,4-Isomer, 20 % 2,6-Isomer) der Firma Bayer Material Science, 3 mPa·s, 48 % NCO, Funktionalität 2.
5) Amin-Katalysator der Firma Evonik Industries AG.
6) KOSMOS® 29, erhältlich bei der Firma Evonik Industries AG: Zinn(II)-Salz der 2-Ethylhexansäure.
7) Polyethermodifiziertes Polysiloxan, erhältlich bei der Firma Evonik Industries AG.
8) Als Zellöffner werden die in den Beispielen 1 - 6 beschriebenen, erfindungsgemäßen Additive, das in Beispiel 7 beschriebene, nicht erfindungsgemäße Additiv sowie Niax® L626 und Niax® L627 der Firma Momentive Performance Materials verwendet.
9) erhältlich bei der Firma Dow Chemical, hierbei handelt es sich um ein Glycerin-basiertes Polyetherpolyol mit einer OH-Zahl von 201 mg KOH/g.

Tabelle 3: Formulierung III für viskoelastische TDI80-Weichblockschaum-Anwendungen

| **Formulierung III** | **Massenteile (pphp)** |
|---|---|
| Rokopol® EP8262.03[10)] | 92 |
| Rokopol® M1170[11)] | 8 |
| Desmodur® T 80[4)] Index <93> | 41,8 |
| Wasser | 1,3 |
| TEGOAMIN® 33[5)] | 0,3 |
| TEGOAMIN® BDE[5)] | 0,15 |
| KOSMOS® 29[6)] | 0,03 |
| Ortegol® 204[12)] | 1,6 |
| TEGOSTAB® BF 2470[7)] | 0,5 |
| Additiv [8)] | variabel |

4) Toluylendiisocyanat T 80 (80 % 2,4-Isomer, 20 % 2,6-Isomer) der Firma Bayer Material Science, 3 mPa·s, 48 % NCO, Funktionalität 2.
5) Amin-Katalysator der Firma Evonik Industries AG.
6) KOSMOS® 29, erhältlich bei der Firma Evonik Industries AG: Zinn(II)-Salz der 2-Ethylhexansäure.
7) Polyethermodifiziertes Polysiloxan, erhältlich bei der Firma Evonik Industries AG.
8) Als Zellöffner werden die in den Beispielen 1 - 6 beschriebenen, erfindungsgemäßen Additive, das in Beispiel 7 beschriebene, nicht erfindungsgemäße Additiv sowie Niax® L626 und Niax® L627 der Firma Momentive Performance Materials verwendet.
10) erhältlich bei der Firma PCC SE, hierbei handelt es sich um ein Polyetherpolyol mit einer OH-Zahl von 185 mg KOH/g.
11) erhältlich bei der Firma PCC SE, hierbei handelt es sich um ein Glycerin-basiertes Polyetherpolyol mit einer OH-Zahl von 34 mg KOH/g.
12) Vernetzer, erhältlich bei der Firma Evonik Industries AG.

Tabelle 4: Formulierung IV für viskoelastische MDI-Weichblockschaum-Anwendungen.

| **Formulierung IV** | **Massenteile (pphp)** |
|---|---|
| Desmophen® 24WB03[13)] | 70 |
| Desmophen® 41\NB01[14)] | 30 |
| Voranat™ M229 MDI[15)] Index <81> | 60,5 |
| Wasser | 2,5 |
| TEGOAMIN® 33[5)] | 0,25 |
| TEGOAMIN® BDE[5)] | 0,2 |
| KOSMOS® 29[6)] | 0,1 |
| Benzylalkohol | 5 |
| TEGOSTAB® B 8110[7)] | 1,0 |

(fortgesetzt)

| Formulierung IV | Massenteile (pphp) |
|---|---|
| Additiv [8] | variabel |
| [5] Amin-Katalysator der Firma Evonik Industries AG.<br>[6] KOSMOS® 29, erhältlich bei der Firma Evonik Industries: Zinn(II)-Salz der 2-Ethylhexansäure.<br>[7] Polyethermodifiziertes Polysiloxan, erhältlich bei der Firma Evonik Industries AG.<br>[8] Als Zellöffner werden die in den Beispielen 1 - 6 beschriebenen, erfindungsgemäßen Additive, das in Beispiel 7 beschriebene, nicht erfindungsgemäße Additiv sowie Niax® L626 und Niax® L627 der Firma Momentive Performance Materials verwendet.<br>[13] erhältlich bei der Firma Bayer Material Science, hierbei handelt es sich um ein Polyetherpolyol mit einer OH-Zahl von 165 mg KOH/g.<br>[14] erhältlich bei der Firma Bayer Material Science, hierbei handelt es sich um ein Glycerin-basiertes Polyetherpolyol mit einer OH-Zahl von 36 mg KOH/g.<br>[15] polymeres MDI der Firma DOW Chemical, 190 mPa·s, 31,1 % NCO, Funktionalität 2,7. | |

**Allgemeine Durchführung zur Herstellung der Schäume**

Die Herstellung der Schäume erfolgte nach folgenden Angaben bei 22 °C und 753 mm Hg Luftdruck. Zur Herstellung der Polyurethanschäume wurden jeweils 250 g Polyol eingesetzt; die anderen Formulierungsbestandteile wurden entsprechend umgerechnet. Dabei bedeutete beispielsweise 1,0 Teil (1,0 pphp) einer Komponente 1 g dieser Substanz je 100 g Polyol.

In einem Pappbecher wurden der Zinnkatalysator Zinn(II)-2-ethylhexanoat, die Polyole, das Wasser, die Aminkatalysatoren und das jeweilige Additiv vorgelegt und für 60 s mit einem Scheibenrührer bei 1000 U/min vermischt.

Anschließend wurde das Isocyanat zugegeben und mit dem gleichen Rührer für 7 s bei 1500 U/min eingearbeitet. Dabei begann die Mischung im Becher aufzuschäumen. Deshalb wurde sie direkt nach dem Ende des Rührens in eine Verschäumungsbox gegossen. Diese hat eine Grundfläche von 17 x 17 cm und eine Höhe von 30 cm. Nach außen verhinderte eine 5 cm dicke Isolierung aus PUR-Schaum ein zu schnelles Abkühlen. Innen war die Box mit einer Kunststofffolie ausgelegt, um den ausgehärteten Schaum anschließend entnehmen zu können. Der Schaum stieg nach dem Eingießen in der Verschäumungsbox auf. Im Idealfall blies der Schaum bei Erreichen der maximalen Steighöhe ab und sackt dann leicht zurück. Dabei öffneten sich die Zellmembrane der Schaumbläschen und eine offenporige Zellstruktur des Schaumstoffs wurde erhalten. Bei einer zu geringen Stabilisierungswirkung kollabierte der PUR-Schaum vor Erreichen der maximalen Steighöhe. Im Falle einer zu starken Stabilisierung stieg der Schaum sehr lange und blies nicht ab. Bedingt durch die dann sehr geschlossene Zellstruktur schrumpfte der Schaum beim anschließenden Abkühlen durch die Volumenkontraktion des sich abkühlenden Gases.

**Anwendungstechnische Tests**

Die hergestellten Schäume wurden anhand folgender physikalischer Eigenschaften bewertet:

a) Rücksacken des Schaumstoffes nach dem Ende der Steigphase (=Rückfall).
Der Rückfall, bzw. das Nachsteigen ergibt sich aus der Differenz der Schaumhöhe nach direktem Abblasen und nach 3 min. nach Abblasen des Schaums. Die Schaumhöhe wird dabei durch eine an einem Zentimetermaß befestigte Nadel auf dem Maximum in der Mitte der Schaumkuppe gemessen. Ein negativer Wert beschreibt hierbei das Rücksacken des Schaumes nach dem Abblasen, ein positiver Wert beschreibt entsprechend das Nachsteigen des Schaumes.
b) Schaumhöhe ist die Höhe des gebildeten, frei gestiegenen Schaums nach 3 Minuten. Die Schaumhöhe wird in Zentimeter (cm) angegeben.
c) Steigzeit
Die Zeitspanne zwischen dem Ende des Mischens der Reaktionskomponenten und dem Abblasen des Polyurethanschaums.
d) Raumgewicht
Die Bestimmung erfolgt, wie in DIN EN ISO 845:2009-10 beschrieben, durch Messung der Rohdichte. Das Raumgewicht wird in $kg/m^3$ angegeben.
e) Porosität

Die Luftdurchlässigkeit des Schaums wurde in Anlehnung an DIN EN ISO 4638:1993-07 durch eine Staudruckmessung am Schaumstoff ermittelt. Der gemessene Staudruck wurde in mm Wassersäule angegeben, wobei dann die niedrigeren Staudruckwerte den offeneren Schaum charakterisieren. Die Werte wurden im Bereich von 0 bis 300 mm gemessen. Die Messung des Staudrucks erfolgte mittels einer Apparatur umfassend eine Stickstoffquelle, Reduzierventil mit Manometer, Durchflussregelschraube, Waschflasche, Durchflussmessgerät, T-Stück, Auflagedüse und einem skaliertem Glasrohr, in welches Wasser gefüllt ist. Die Auflagedüse weist eine Kantenlänge von 100 x 100 mm, ein Gewicht von 800 g, eine lichte Weite der Austrittsöffnung von 5 mm, eine lichte Weite des unteren Auflageringes von 20 mm und einen Außendurchmesser des unteren Auflageringes von 30 mm auf.

Die Messung erfolgt durch Einstellung des Stickstoffvordrucks per Reduzierventil auf 0,1 bar und Einregeln der Durchflussmenge auf 100 l/h. Die Wassermenge wird im skalierten Glasrohr so eingestellt, dass keine Druckdifferenz aufgebaut und ablesbar ist. Für die Vermessung des Prüfkörpers mit einer Dimension von 250 x 250 x 50 mm wird die Auflagedüse an den Ecken des Prüfkörpers kantenkongruent aufgelegt sowie einmal an der (geschätzten) Mitte des Prüfkörpers (jeweils auf der Seite mit der größten Oberfläche) aufgelegt. Abgelesen wird, wenn sich ein konstanter Staudruck eingestellt hat.

Die Auswertung erfolgt durch Mittelwertbildung über die fünf erhaltenen Messwerte.

f) Zahl der Zellen pro cm (Zellzahl): Diese wird auf einer Schnittfläche optisch bestimmt (gemessen gemäß DIN EN 15702).

g) Stauchhärte CLD 40% nach DIN EN ISO 3386-1:1997 + A1:2010. Die Angabe der Messwerte erfolgt in Kilopascal (kPa).

h) Zugfestigkeit und Bruchdehnung nach DIN EN ISO 1798:2008. Die Angabe der Messwerte der Zugfestigkeit erfolgt in Kilopascal (kPa), die der Bruchdehnung in Prozent (%).

i) Rückprallelastizität nach DIN EN ISO 8307:2007. Die Angabe der Messwerte der erfolgt in Prozent (%).

Bestimmung der Raumtemperatur-Emission nach dem so genannten Prüfkammertest (PK)

Von den erhaltenen Schäumen aus Formulierung I wurde die Emission bei Raumtemperatur in Anlehnung an die DIN-Vorschrift DIN EN ISO 16000-9:2008-04 bestimmt. Die Probenentnahme erfolgte nach 24 Stunden. Hierzu wurden 2 Liter der Prüfkammeratmosphäre mit einer Flussrate von 100mL/min über ein mit Tenax® TA (mesh35/60) gefülltes Adsorptionsröhrchen gegeben. Im Folgenden wird die Durchführung der Thermodesorption mit anschließender Gaschromatographie/Massenspektrometrie-Kopplung (GC/MS) beschrieben.

a) Messtechnik: Die Thermodesorption wurde mit einem Thermodesorber "TDS2" mit Probenwechsler der Fa. Gerstel, Mülheim, in Verbindung mit einem Agilent 7890/5975 GC/MSD-System durchgeführt.

b) Die Messbedingungen sind in Tabelle 5 und 6 angegeben.

Tabelle 5: Messparameter Thermodesorption für PK-Messung.

| | |
|---|---|
| Thermodesorption | Gerstel TDS2 |
| Desorptionstemperatur | 280°C |
| Desorptionsdauer | 5 min |
| Fluss | 65 mL/min |
| Transferline | 280°C |
| Kryofokussierung | KAS 4 |
| Liner | Glasverdampferrohr mit silanisierter Glaswolle |
| Temperatur | -150°C |

Tabelle 6: Messparameter Gaschromatographie/Massenspektrometrie für PK-Messung.

| | |
|---|---|
| GC | Kapillar-GC Agilent 7890 |
| Temperaturprogramm | -150°C; 1 min; ↗10°C/s; 280°C |
| Säule | Agilent 19091B-115, Ultra 2, 50 m * 0,32 mm dF 0,5 μm |
| Fluss | 1,3 mL/min const. Flow |
| Temperaturprogramm | 50°C; 2 min; ↗3°C/min; 92°C; ↗5°C/min; 160°C; ↗10°C/min; 280°C, 20 min |
| Detektor | Agilent MSD 5975 |

(fortgesetzt)

| | |
|---|---|
| Auswertung | Auswertung des Totalionenstrom-Chromatrogramms durch Berechnung als Toluoläquivalent |

c) Zur Kalibrierung wurde 2 μL eines Gemisches aus Toluol und Hexadekan in Methanol (je 0,125 mg/mL) auf ein gereinigtes, mit Tenax® TA (mesh35/60) gefülltes Adsorptionsröhrchen gegeben und vermessen (Desorption 5 min; 280°C).

**Geruchliche Überprüfung der erhaltenen Schäume**

Die fertigen Schäume, dargestellt nach Formulierung I wurden in geruchsneutralen Kunststofftüten gepackt und luftdicht aufbewahrt. Für die Geruchsbewertung des Schaums wurden Würfel der Größe 10 cm x 10 cm x 10 cm ausgeschnitten und in Gläser mit einem Volumen von 1 L überführt, aus denen die Proben abgerochen wurden. Die Gläser wurden mit einem Schraubdeckel verschlossen. Die geruchliche Überprüfung erfolgte nach 24 stündiger Lagerung der Gläser bei 22°C.

Die geruchliche Überprüfung wurde von einem trainierten Panel mit einer Anzahl von 13 Personen bewertet. Hierbei wurde die Intensität des Geruchs abgefragt, wenig Geruch wurde mit +, mittelstarker Geruch mit ++ und starker Geruch wurde mit +++ bewertet.

**Überprüfung der Lagerstabilität der erfindungsgemäßen Additive**

Zur Überprüfung der Lagerstabilität wurden die erfindungsgemäßen Additive in einer sogenannten Aktivatorlösung bestehend aus Wasser, Aminkatalysatoren, Stabilisator und erfindungsgemäßem Additiv zusammengerührt und in Gläser mit Schraubdeckel abgefüllt. Diese Aktivatorlösung wurde nach 24 stündiger Lagerung bei 22°C analog zur oben beschriebenen Durchführung nach Formulierung I mit Polyol, Zinnkatalysator und Isocyanat versetzt und die erhaltenen Schäume bezüglich Offenzelligkeit und Zellstruktur beurteilt.

**Ergebnisse der Verschäumungen**

Die erfindungsgemäßen Additive der Beispiele 1 - 6, das in Beispiel 7 beschriebene, nicht erfindungsgemäße Additiv sowie Niax® L626 und Niax® L627 der Firma Momentive Performance Materials werden im Folgenden in den Formulierungen I - IV ausgeprüft.

Die Ergebnisse der anwendungstechnischen Tests für die verschiedenen Formulierungen und verwendeten Additive sind in Tabellen 7 bis 12 wiedergegeben.

Tabelle 7: Verschäumungsergebnisse bei Verwendung verschiedener Zellöffner nach Formulierung I

| Nr. | Additiv | Einsatzmenge [pphp] | Steigzeit [s] | Steighöhe [cm] | Rückfall [cm] | Porosität [mm] | Dichte [kg/m³] | Stauchhärte (CLD 40%) [kPa] | Zellzahl [cm⁻¹] | Zugfestigkeit [kPa] | Ballrebound [%] | VOC [µg/m³] |
|---|---|---|---|---|---|---|---|---|---|---|---|---|
| 1 | Referenz | 0 | 187 [d)] | n.b. | n.b. | n.b. | n.b. | n.b. | n.b. | n.b. | n.b. | n.b. |
| 2 | Niax® L626 [a)] | 0,5 | 181 [d)] | n.b. | n.b. | n.b. | n.b. | n.b. | n.b. | n.b. | n.b. | n.b. |
| 3 | Niax® L626[a)] | 1 | 158 | 33,1 | 0,4 | 30 | 36,5 | 0,6 | 15 | 27,7 | 5 | 1632 |
| 4 | Bsp. 1 [b)] | 1 | 151 | 31,6 | 0,2 | 22 | 38,1 | 0,5 | 15 | 38,8 | 6 | 81 |
| 5 | Bsp. 2 [b)] | 1 | 146 | 31,0 | 0,3 | 15 | 38,0 | 0,5 | 16 | 37,5 | 6 | 99 |
| 6 | Bsp. 3 [b)] | 1 | 161 | 32,3 | 0,3 | 28 | 37,6 | 0,7 | 16 | 48,3 | 5 | 75 |
| 7 | Bsp. 4 [b)] | 1 | 138 | 31,0 | 0,3 | 5 | 38,3 | 0,7 | 16 | 28,1 | 7 | 79 |
| 8 | Bsp. 5 [b)] | 1 | 144 | 31,1 | 0,1 | 8 | 38,1 | 0,5 | 15 | 26,3 | 7 | 121 |
| 9 | Bsp. 6 [b)] | 1 | 155 | 31,6 | 0,5 | 24 | 37,8 | 0,6 | 16 | 32,1 | 5 | 95 |
| 10 | Bsp. 7 [c)] | 1 | 195 [d)] | n.b. | n.b. | n.b. | n.b. | n.b. | n.b. | n.b. | n.b. | n.b. |

[a)] Vergleichszellöffner Niax® L626 der Firma Momentive Performance Materials
[b)] erfindungsgemäße Additive, dargestellt nach den Beispielen 1 - 6
[c)] nicht erfindungsgemäßes Additiv, dargestellt nach Beispiel 7
[d)] Der Schaum steigt auf und bläst nicht ab. Stattdessen steigt der Schaum lange nach (> 2,5 min). Beim nachfolgenden Abkühlen schrumpft der Schaum stark. Eine Messung der physikalischen Eigenschaften konnte aufgrund des Schrumpfes nicht durchgeführt werden.

Tabelle 8: Geruchliche Überprüfung der Schäume nach Formulierung I durch 13 olfaktorisch geschulte Personen

| Nr. | Additiv | Einsatzmenge [pphp] | Intensität des Geruchs | | |
|---|---|---|---|---|---|
| | | | +++ | ++ | + |
| 11 | Niax® L626 a) | 1 | 11 | 2 | 0 |
| 12 | Erfindungsgemäßes Additiv aus Bsp. 1 b) | 1 | 0 | 3 | 10 |
| 13 | Erfindungsgemäßes Additiv aus Bsp. 2 b) | 1 | 0 | 5 | 8 |
| 14 | Erfindungsgemäßes Additiv aus Bsp. 3 b) | 1 | 1 | 6 | 6 |
| 15 | Erfindungsgemäßes Additiv aus Bsp. 4 b) | 1 | 0 | 0 | 13 |
| 16 | Erfindungsgemäßes Additiv aus Bsp. 5 b) | 1 | 2 | 3 | 8 |
| 17 | Erfindungsgemäßes Additiv aus Bsp. 6 b) | 1 | 2 | 4 | 7 |
| a) Vergleichszellöffner Niax® L626 der Firma Momentive Performance Materials<br>b) erfindungsgemäße Additive, dargestellt nach den Beispielen 1 - 6 | | | | | |

Tabelle 9: Überprüfung der Lagerstabilität verschiedener Zellöffner nach Formulierung I

| Nr. | Additiv | Einsatzmenge [pphp] | Steigzeit [s] | Steighöhe [cm] | Rückfall [cm] | Porosität [mm] | Zellzahl [$cm^{-1}$] |
|---|---|---|---|---|---|---|---|
| 18 | Niax® L626a) | 1 | 184d) | n.b. | n.b. | n.b. | n.b. |
| 19 | Erfindungsgemäßes Additiv aus Bsp. 1 b) | 1 | 149 | 31,6 | 0,1 | 23 | 16 |
| 20 | Erfindungsgemäßes Additiv aus Bsp. 2 b) | 1 | 150 | 31,3 | 0,3 | 10 | 15 |
| 21 | Erfindungsgemäßes Additiv aus Bsp. 3 b) | 1 | 158 | 32,2 | 0,4 | 33 | 16 |
| 22 | Erfindungsgemäßes Additiv aus Bsp. 4 b) | 1 | 143 | 31,2 | 0,3 | 5 | 15 |
| 23 | Erfindungsgemäßes Additiv aus Bsp. 5 b) | 1 | 144 | 31,4 | 0,2 | 12 | 16 |
| 24 | Erfindungsgemäßes Additiv aus Bsp. 6 b) | 1 | 156 | 31,9 | 0,2 | 21 | 14 |
| a) Vergleichszellöffner Niax® L626 der Firma Momentive Performance Materials<br>b) erfindungsgemäße Additive, dargestellt nach den Beispielen 1 - 6<br>d) Der Schaum steigt auf und bläst nicht ab. Stattdessen steigt der Schaum lange nach (> 2,5 min). Beim nachfolgenden Abkühlen schrumpft der Schaum stark. Eine Messung der physikalischen Eigenschaften konnte aufgrund des Schrumpfes nicht durchgeführt werden. | | | | | | | |

Wie in Tabelle 7 dargestellt, wird ohne den Einsatz eines zellöffnenden Additivs mit Formulierung I ein stark geschrumpfter Schaum erhalten (Eintrag 1). Auch der Einsatz von 0,5 pphp des Vergleichzellöffners Niax® L626 der Firma Momentive Performance Materials und der Einsatz von 1 pphp des in Beispiel 7 dargestellten nicht erfindungsgemäßen Additivs führen zu stark geschrumpften Schäumen (Eintrag 2 und 10). Durch Einsatz von 1 pphp des Vergleichzellöffners Niax® L626 (Eintrag 3), sowie durch Einsatz von 1 pphp der in den Beispielen 1 - 6 beschriebenen erfindungsgemäßen Additive (Einträge 4 - 9) können Schäume erhalten werden, die eine ausreichend feine und offene Zellstruktur aufweisen (von geschlossenen Schäumen spricht man ab etwa 300 mm Wassersäule). Der Schaumstoff, gekennzeichnet durch die Verwendung von 1 pphp Niax® L626 (Eintrag 3), weist einen extrem hohen Emissionswert (1632 $\mu g/m^3$) auf, die Verwendung von 1 pphp der erfindungsgemäßen Additive, dargestellt in den Beispielen 1 - 6, führt dagegen zu Schäumen mit extrem niedrigen Emissionswerten (75 - 121 $\mu g/m^3$, Einträge 4 - 9).

Wie die Tabelle 8 zeigt, ist die Intensität des Geruches der Schäume, welche mit den erfindungsgemäßen

Additiven aus den Beispielen 1 - 6 dargestellt wurden (Einträge 12 - 17) , durchweg geringer als der Geruch des Schaums, welcher mit dem Vergleichszellöffner Niax® L626 der Firma Momentive Performance Materials hergestellt wurde (Eintrag 11). Dabei stuft eine deutliche Mehrzahl der Probanden die erfindungsgemäßen Proben als geruchsneutral ein. Die geruchliche Überprüfung wurde von den Probanden noch zweimal wiederholt, wobei die vorgenannten Ergebnisse in genau der gleichen Weise bestätigt wurden. Aus den Ergebnissen ist ersichtlich, dass die Probanden einen Schaum, der mit einem erfindungsgemäßen Additiv behandelt wurde, als weniger intensiv riechend beurteilt haben.

Aus Tabelle 9 geht hervor, dass die erfindungsgemäßen Additive aus den Beispielen 1 - 6 auch nach 24 stündiger Lagerung in einer Aktivatormischung, bestehend aus Wasser, Aminkatalysatoren, Stabilisator und erfindungsgemäßem Additiv in ihrer Wirkung nicht an Potenz verlieren (Einträge 19 - 24). Sowohl die Porosität als auch die Zellzahl variiert nicht verglichen mit den Proben, welche direkt ohne Lagerung in einer Aktivatormischung verschäumt wurden (Tabelle 7, Einträge 4 - 9). Im Gegensatz zum Vergleichszellöffner Niax® L626 (Eintrag 18) werden die erfindungsgemäßen Additive während der Lagerung in der Aktivatormischung nicht abgebaut.

Tabelle 10: Verschäumungsergebnisse bei Verwendung verschiedener Zellöffner nach Formulierung II

| Nr. | Additiv | Einsatzmenge [pphp] | Steigzeit [s] | Steighöhe [cm] | Rückfall [cm] | Porosität [mm] | Dichte [kg/m³] | Stauchhärte (CLD 40%) [kPa] | Zellzahl [cm⁻¹] | Zugfestigkeit [kPa] | Ballrebound [%] |
|---|---|---|---|---|---|---|---|---|---|---|---|
| 25 | Referenz | 0 | 201 [d)] | n.b. | n.b. | n.b. | n.b. | n.b. | n.b. | n.b. | n.b. |
| 26 | Niax® L627[a)] | 1 | 160 | 30,3 | 0,1 | 120 | 53,1 | 1,6 | 13 | 51,9 | 3 |
| 27 | Bsp. 1 [b)] | 0,5 | 167 | 30,1 | 0,0 | 118 | 53,0 | 1,6 | 13 | 73,9 | 4 |
| 28 | Bsp. 2 [b)] | 0,5 | 160 | 30,2 | 0,1 | 111 | 52,8 | 1,4 | 13 | 63,7 | 5 |
| 29 | Bsp. 3 [b)] | 0,5 | 177 | 31,3 | 0,4 | 133 | 52,3 | 1,5 | 12 | 61,8 | 6 |
| 30 | Bsp. 4 [b)] | 0,5 | 155 | 29,9 | 0,4 | 109 | 53,5 | 1,8 | 12 | 42,4 | 1 |
| 31 | Bsp. 5 [b)] | 0,5 | 163 | 30,3 | 0,3 | 120 | 53,0 | 1,5 | 14 | 89,4 | 3 |
| 32 | Bsp. 6 [b)] | 0,5 | 166 | 30,2 | 0,5 | 121 | 53,6 | 1,5 | 15 | 59,7 | 1 |
| 33 | Bsp. 7 [c)] | 0,5 | 189 [d)] | n.b. | n.b. | n.b. | n.b. | n.b. | n.b. | n.b. | n.b. |

a) Vergleichszellöffner Niax® L627 der Firma Momentive Performance Materials

b) erfindungsgemäße Additive, dargestellt nach den Beispielen 1 - 6

c) nicht erfindungsgemäßes Additiv, dargestellt nach Beispiel 7

d) Der Schaum steigt auf und bläst nicht ab. Stattdessen steigt der Schaum lange nach (> 2,5 min). Beim nachfolgenden Abkühlen schrumpft der Schaum stark. Eine Messung der physikalischen Eigenschaften konnte aufgrund des Schrumpfes nicht durchgeführt werden.

Wie in Tabelle 10 dargstellt, wird ohne den Einsatz eines zellöffnenden Additivs mit Formulierung II ein stark geschrumpfter Schaum erhalten (Eintrag 25). Auch der Einsatz von von 1 pphp des in Beispiel 7 dargestellten nicht erfindungsgemäßen Additivs führt zu stark geschrumpften Schäumen (Eintrag 33). Durch Einsatz des Vergleichzellöffners Niax® L627 (Eintrag 26), sowie durch Einsatz der in den Beispielen 1 - 6 beschriebenen erfindungsgemäßen Additive (Einträge 27 - 32) können Schäume erhalten werden, die eine ausreichend feine und offene Zellstruktur aufweisen (von geschlossenen Schäumen spricht man ab etwa 300 mm Wassersäule). Bemerkenswert ist die Tatsache, dass um vergleichbar offene und feine Schäume zu erhalten, vom Vergleichszellöffner Niax L627 1 pphp eingesetzt werden muss, von den in den Beispielen 1 - 6 dargestellten erfindungsgemäßen Additiven jedoch lediglich 0,5 pphp von Nöten sind.

Tabelle 11: Verschäumungsergebnisse bei Verwendung verschiedener Zellöffner nach Formulierung III

| Nr. | Additiv | Einsatzmenge [pphp] | Steigzeit [s] | Steighöhe [cm] | Rückfall [cm] | Porosität [mm] | Dichte [kg/m³] | Stauchhärte (CLD 40%) [kPa] | Zellzahl [cm⁻¹] | Zugfestigkeit [kPa] | Ballrebound [%] |
|---|---|---|---|---|---|---|---|---|---|---|---|
| 34 | Referenz | 0 | 153 [d)] | n.b. | n.b. | n.b. | n.b. | n.b. | n.b. | n.b. | n.b. |
| 35 | Niax® L627 [a)] | 0,7 | 108 | 33,0 | 0,0 | 190 | 49,1 | 2,0 | 14 | 58,7 | 7 |
| 36 | Bsp. 1 [b)] | 0,5 | 110 | 32,9 | 0,1 | 180 | 49,3 | 2,1 | 16 | 71,3 | 8 |
| 37 | Bsp. 2 [b)] | 0,5 | 113 | 32,8 | 0,2 | 173 | 49,3 | 2,3 | 15 | 67,5 | 5 |
| 38 | Bsp. 3 [b)] | 0,5 | 121 | 33,5 | 0,2 | 200 | 48,6 | 2,4 | 15 | 81,4 | 5 |
| 39 | Bsp. 4 [b)] | 0,5 | 105 | 32,1 | 0,0 | 167 | 49,5 | 1,9 | 16 | 67,5 | 6 |
| 40 | Bsp. 5 [b)] | 0,5 | 116 | 33,0 | 0,0 | 183 | 48,9 | 2,0 | 16 | 59,4 | 3 |
| 41 | Bsp. 6 [b)] | 0,5 | 119 | 33,1 | 0,1 | 182 | 48,9 | 2,1 | 15 | 63,1 | 7 |
| 42 | Bsp. 7 [c)] | 0,5 | 160 [d)] | n.b. | n.b. | n.b. | n.b. | n.b. | n.b. | n.b. | n.b. |

[a)] Vergleichszellöffner Niax® L627 der Firma Momentive Performance Materials

[b)] erfindungsgemäße Additive, dargestellt nach den Beispielen 1 - 6

[c)] nicht erfindungsgemäßes Additiv, dargestellt nach Beispiel 7

[d)] Der Schaum steigt auf und bläst nicht ab. Stattdessen steigt der Schaum lange nach (> 2,5 min). Beim nachfolgenden Abkühlen schrumpft der Schaum stark. Eine Messung der physikalischen Eigenschaften konnte aufgrund des Schrumpfes nicht durchgeführt werden.

Wie in Tabelle 11 dargestellt, wird ohne den Einsatz eines zellöffnenden Additivs mit Formulierung III ein stark geschrumpfter Schaum erhalten (Eintrag 34). Auch der Einsatz von von 1 pphp des in Beispiel 7 dargestellten nicht erfindungsgemäßen Additivs führt zu stark geschrumpften Schäumen (Eintrag 42). Durch Einsatz des Vergleichzellöffners Niax® L627 (Eintrag 35), sowie durch Einsatz der in den Beispielen 1 - 6 beschriebenen erfindungsgemäßen Additive (Einträge 36 - 41) können Schäume erhalten werden, die eine ausreichend feine und offene Zellstruktur aufweisen (von geschlossenen Schäumen spricht man ab etwa 300 mm Wassersäule). Bemerkenswert ist die Tatsache, dass um vergleichbar offene und feine Schäume zu erhalten, vom Vergleichszellöffner Niax L627 0,7 pphp eingesetzt werden muss, von den in den Beispielen 1 - 6 dargestellten erfindungsgemäßen Additiven jedoch lediglich 0,5 pphp von Nöten sind.

Tabelle 12: Verschäumungsergebnisse bei Verwendung verschiedener Zellöffner nach Formulierung IV

| Nr. | Additiv | Einsatzmenge [pphp] | Steigzeit [s] | Steighöhe [cm] | Rückfall [cm] | Porosität [mm] | Dichte [kg/m³] | Stauchhärte (CLD 40%) [kPa] | Zellzahl [cm⁻¹] | Zugfestigkeit [kPa] | Ballrebound [%] |
|---|---|---|---|---|---|---|---|---|---|---|---|
| 43 | Referenz | 0 | 181 [d)] | n.b. | n.b. | n.b. | n.b. | n.b. | n.b. | n.b. | n.b. |
| 44 | Niax® L626[a)] | 1 | 155 | 32,1 | 0,0 | 23 | 46,0 | 3,1 | 12 | 91,9 | 7 |
| 45 | Bsp. 1 [b)] | 1 | 150 | 31,7 | 0,2 | 30 | 46,0 | 2,6 | 12 | 128,3 | 8 |
| 46 | Bsp. 2 [b)] | 1 | 150 | 32,0 | 0,1 | 31 | 46,1 | 2,8 | 11 | 122,2 | 5 |
| 47 | Bsp. 3 [b)] | 1 | 156 | 32,4 | 0,3 | 41 | 45,3 | 2,6 | 12 | 114,9 | 6 |
| 48 | Bsp. 4 [b)] | 1 | 147 | 31,1 | 0,3 | 23 | 46,3 | 3,2 | 12 | 99,3 | 4 |
| 49 | Bsp. 5 [b)] | 1 | 152 | 32,1 | 0,2 | 27 | 46,1 | 2,8 | 12 | 94,4 | 8 |
| 50 | Bsp. 6 [b)] | 1 | 155 | 32,4 | 0,4 | 28 | 46,0 | 2,9 | 14 | 104,7 | 5 |
| 51 | Bsp. 7 [e)] | 1 | 174 [d)] | n.b. | n.b. | n.b. | n.b. | n.b. | n.b. | n.b. | n.b. |

[a)] Vergleichszellöffner Niax® L626 der Firma Momentive Performance Materials

[b)] erfindungsgemäße Additive, dargestellt nach den Beispielen 1 - 6

[c)] nicht erfindungsgemäßes Additiv, dargestellt nach Beispiel 7

[d)] Der Schaum steigt auf und bläst nicht ab. Stattdessen steigt der Schaum lange nach (> 2,5 min). Beim nachfolgenden Abkühlen schrumpft der Schaum stark. Eine Messung der physikalischen Eigenschaften konnte aufgrund des Schrumpfes nicht durchgeführt werden.

Wie in Tabelle 12 dargestellt, wird ohne den Einsatz eines zellöffnenden Additivs mit Formulierung IV ein stark geschrumpfter Schaum erhalten (Eintrag 43). Auch der Einsatz von von 1 pphp des in Beispiel 7 dargestellten nicht erfindungsgemäßen Additivs führt zu stark geschrumpften Schäumen (Eintrag 51). Durch Einsatz von 1 pphp des Vergleichzellöffners Niax® L626 (Eintrag 44), sowie durch Einsatz von 1 pphp der in den Beispielen 1 - 6 beschriebenen erfindungsgemäßen Additive (Einträge 45 - 50) können Schäume erhalten werden, die eine ausreichend feine und offene Zellstruktur aufweisen (von geschlossenen Schäumen spricht man ab etwa 300 mm Wassersäule).

## Patentansprüche

1. Verwendung von verknüpften Siloxan-Blockpolymeren der allgemeinen durchschnittlichen Formel

$$M_a\, M^1_b\, D_c\, D^1_d\, T_e\, Q_f\, G_g \qquad \text{Formel (I)}$$

mit

M = 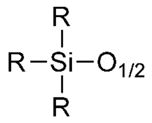 $M^1$ = 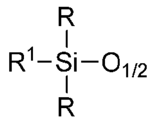 D = 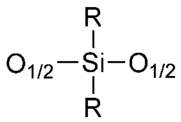

$D^1$ = 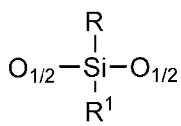 T = 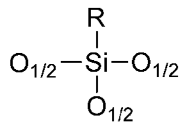 Q = 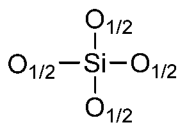

G = unabhängig voneinander gleiche oder verschiedene Reste aus der Gruppe:

$$(O_{1/2})_n SiR_m-CH_2CHR^3-R^2-CHR^3CH_2-SiR_m(O_{1/2})_n,$$

$$(O_{1/2})_n SiR_m-CH_2CHR^3-R^2-CR^3=CH_2$$

$$(O_{1/2})_n SiR_m-CH_2CHR^3-R^2-CR^3=CR^3-CH_3$$

a = 0 - 20, bevorzugt 0 - 10, insbesondere 2,4 - 4,1,
b = 0 - 20, bevorzugt 0 - 10, insbesondere 0,
c = 3 - 450, bevorzugt 5 - 350, insbesondere 10 - 250,
d = 0 - 40, bevorzugt 1 - 30, insbesondere 1,5 - 20,
e = 0 - 20, bevorzugt 0 - 10, insbesondere 0,
f = 0 - 20, bevorzugt 0 - 10, insbesondere 0,

g = 0,1 - 3, bevorzugt 0,15 - 2, insbesondere 0,2 - 1,5,
wobei $a + b \geq 2$ sowie $N = a + b + c + d + e + f + g \geq 11$ und $\leq 500$, $b + d \geq 1$
R = unabhängig voneinander gleiche oder verschiedene Alkylreste mit 1 - 16 Kohlenstoffatomen oder Arylreste mit 6 - 16 Kohlenstoffatomen oder H oder $-OR^3$, bevorzugt Methyl, Ethyl, Phenyl, Oktyl, Dodecyl oder H, insbesondere Methyl,
$R^1$ = unabhängig voneinander gleiche oder verschiedene Polyetherreste, bevorzugt gleiche oder verschiedene Polyetherreste der allgemeinen Formel (II)

$$-\left[CH_2\right]_h-O-\left[CH_2CH_2O\right]_i-\left[CH_2CH(CH_3)O\right]_j-\left[CH(CH_3)CH_2O\right]_k-\left[CR^4{}_2CR^4{}_2O\right]_l-R^5$$

Formel (II)

$R^2$ = unabhängig voneinander gleiche oder verschiedene divalente organische Reste, bevorzugt gleiche oder verschiedene divalente organische Reste mit 2 - 30 Kohlenstoffatomen, die gegebenenfalls durch Etherfunktionen oder $(-SiR_2O-)_n$-Gruppenunterbrochen sind und gegebenenfalls OH-Funktionen tragen,
$R^3$ = unabhängig voneinander gleiche oder verschiedene Alkylreste mit 1 - 16 Kohlenstoffatomen oder Arylreste mit 6 - 16 Kohlenstoffatomen oder H,
$R^4$ = gleiche oder verschiedene Alkylreste mit 1 bis 18 Kohlenstoffatomen, die gegebenenfalls Etherfunktionen besitzen, oder Arylreste mit 6 - 18 Kohlenstoffatomen , die gegebenenfalls Etherfunktionen besitzen, oder H, bevorzugt H, Ethyl und Benzyl,
$R^5$ = gleiche oder verschiedene Reste aus der Gruppe: $R^3$, H, $-C(O)R^3$, bevorzugt Methyl, Butyl, H oder -C(O)Me,
n = unabhängig voneinander 1 oder 2
m = unabhängig voneinander 1 oder 2
m+n=3
h = 2 - 18, bevorzugt 2 - 10, insbesondere bevorzugt 3,
i = 0 - 100, bevorzugt 0 - 80, insbesondere bevorzugt 0 - 50,
j = 0 - 100, bevorzugt 0 - 80, insbesondere bevorzugt 0 - 50,
k = 0 - 100, bevorzugt 0 - 80, insbesondere bevorzugt 0 - 50,
l = 0 - 80, bevorzugt 0 - 40, insbesondere bevorzugt 0,
mit der Maßgabe $i + j + k + l \geq 3$,
als Additiv bei der Herstellung von viskoelastischem Polyurethanschaum unter Einsatz von Polyolmischungen und zumindest einer Isocyanatkomponente, wobei die insgesamt eingesetzte Polyolkomponente eine durchschnittliche Hydroxylzahl, bestimmt nach DIN 53240-1:2012-07, von 57 - 300 mg KOH/g aufweist, und wobei die Herstellung des PUR-Schaumes bei einem Isocyanat-Index von 65 bis 108 erfolgt.

**2.** Verwendung nach Anspruch 1, wobei das Siloxan nach Formel (I) als Zellöffner fungiert.

**3.** Verwendung nach einem der Ansprüche 1 oder 2, wobei das Siloxan nach Formel (I) in Form einer Additivzusammensetzung zur Anwendung gelangt, umfassend 0 bis 90 Gew.-%, vorzugsweise 10 bis 80 Gew.-%, besonders bevorzugt 20 bis 70 Gew.-% eines oder mehrerer anorganischer oder organischer Lösungsmittel, vorzugsweise ausgewählt aus Wasser, Alkoholen, insbesondere Polyethermonoolen oder -polyolen, vorzugsweise bestehend aus H-funktionellen Startersubstanzen, an welche mittels Alkoxylierung Alkylenoxide (Epoxide) mit 2-24 Kohlenstoffatomen, vorzugsweise Ethylenoxid und/oder Propylenoxid, angelagert wurden und die ein Molekulargewicht von vorzugsweise 200 - 8000 g/mol, bevorzugt von 300 - 5000 g/mol, besonders bevorzugt von 500 - 1000 g/mol, und einen PO-Gehalt von vorzugsweise 10 - 100 Gew.%, bevorzugt von 50-100 Gew.% aufweisen sowie Polyestermonoolen oder-polyolen mit einem Molekulargewicht vorzugsweise im Bereich von 200 bis 4500 g/mol, Glykolen, Alkoxylaten, Carbonaten, Ether, Ester, verzweigten oder linearen aliphatischen oder aromatischen Kohlenwasserstoffen und/oder Ölen synthetischer und/oder natürlicher Herkunft.

**4.** Verwendung nach einem der Ansprüche 1 bis 3, **dadurch gekennzeichnet, dass** das Additiv der Formel (I) in einer Menge von 0,001 bis 10 Gew.-Teile, insbesondere 0,2 bis 5 Gew.-Teilen pro 100 Teilen des insgesamt eingesetzten Polyols eingesetzt wird.

**5.** Verwendung nach einem der Ansprüche 1 bis 4, **dadurch gekennzeichnet, dass** die Herstellung des PUR-Schaums

unter Einsatz von reaktivem Amin und/oder Amin mit einer Molmasse > 100 g/mol erfolgt, vorzugsweise mit einer Molmasse > 160 g/mol als Katalysator erfolgt.

6. Verwendung nach einem der Ansprüche 1 bis 5, **dadurch gekennzeichnet, dass** die Herstellung des PUR-Schaums unter Einsatz von Toluylendiisocyanat (TDI) und/oder Methylendiphenyldiisocyanat (MDI) und/oder MDI-basierten Isocyananten, vorzugsweise Toluylendiisocyanat, insbesondere unter Einsatz eines Gemisches aus 80 % Toluol-2,4-diisocyanat und 20 % Toluol-2,6-diisocyanat erfolgt.

7. Verwendung nach einem der Ansprüche 1 bis 6, **dadurch gekennzeichnet, dass** das insgesamt eingesetzte Siloxan der Formel (I) zumindest zu einem Anteil von 5 Gew.-% eine Molmasse > 50000 g/mol, vorzugsweise > 60000 g/mol aufweist, Gew.-% bezogen auf das insgesamt eingesetzte Siloxan der Formel (I).

8. Verfahren zur Herstellung von viskoelastischem Polyurethanschaum, durch Umsetzung von Polyolmischungen mit mindestens einer Isocyanatkomponente in Gegenwart eines oder mehrerer Katalysatoren, die die Reaktionen Isocyanat-Polyol und/oder Isocyanat-Wasser und/oder die Isocyanat-Trimerisierung katalysieren, **dadurch gekennzeichnet, dass** die Umsetzung in Gegenwart eines Additivs der Formel (I) durchgeführt wird, wobei die insgesamt eingesetzte Polyolkomponente eine durchschnittliche Hydroxylzahl, bestimmt nach DIN 53240-1:2012-07, von 57 - 300 mg KOH/g aufweist, und wobei die Herstellung des PUR-Schaumes bei einem Isocyanat-Index von 65 bis 108 erfolgt.

9. Viskoelastischer Polyurethanschaum, hergestellt gemäß einem Verfahren nach Anspruch 8.

10. Aktivator-Zusammensetzung zur Herstellung von viskoelastischem Polyurethanschaum, umfassend Polyol, enthaltend mindestens ein Polyol mit einer Hydroxylzahl > 100 mg KOH/g, Additiv gemäß Formel (I), Aminkatalysator, optional Katalysatoren, wobei Zinn-haltige Katalysatoren ausgenommen sind, wobei das insgesamt enthaltene Polyol eine durchschnittliche Hydroxylzahl, bestimmt nach DIN 53240-1:2012-07, von 57 - 300 mg KOH/g aufweist.

11. Zusammensetzung zur Herstellung von viskoelastischem Polyurethanschaum, umfassend Polyolmischungen, enthaltend mindestens ein Polyol mit einer Hydroxylzahl > 100 mg KOH/g, di- oder polyfunktionelles Isocyanat, Additiv gemäß Formel (I), Aminkatalysator, metallhaltige Katalysatoren, wie vorzugsweise Kalium-, Zink- und/oder Zinn-haltiger-Verbindungen, Stabilisator, Treibmittel, wie vorzugsweise Wasser, ggf. Hilfsmittel, wie vorzugsweise physikalische Treibmitteln, Flammschutzmittel, Antioxidantien, UV-Stabilisatoren, Farbpasten, Biozide, Füllstoffe und/oder Vernetzer,
wobei das insgesamt enthaltene Polyol eine durchschnittliche Hydroxylzahl, bestimmt nach DIN 53240-1:2012-07, von 57 - 300 mg KOH/g aufweist.

12. Zusammensetzung nach Anspruch 11, umfassend Polyol in Mengen von 25 bis 80 Gew.-%, Wasser in Mengen von 1 bis 5 Gew.-%, Katalysator in Mengen von 0,01 bis 1 Gew.-%, physikalisches Treibmittel in Mengen von 0 bis 50 Gew.-%, Stabilisatoren, wie vorzugsweise Si-haltige und nicht Si-haltige, insbesondere Si-haltige und nicht Si-haltige organische Stabilisatoren und Tenside, in Mengen bis 5 Gew.-%, Isocyanat in Mengen von 20 bis 60 Gew.% sowie Siloxan nach Formel (I) in Mengen von 0,001 bis 10 Gew.-%, vorzugsweise 0,1 bis 5 Gew-%.

13. Verwendung von Polyurethan-Schaum gemäß Anspruch 9 als Verpackungsschaum, Matratze, Möbelpolster, Werkstoff in Kraftfahrzeuginnenräumen, Automobil-Sitzpolster, Kopfstütze, Automobil-Innenverkleidung, Schallabsorptionsmaterial, Schuhsole, Teppichrückseitenschaum, Filterschaum, Schwamm, oder zur Herstellung entsprechender Produkte, insbesondere als Werkstoff in Kraftfahrzeuginnenräumen.

14. Verwendung von Additiv der Formel (I), nach einem der Ansprüche 1 bis 7, zur Herstellung von viskoelastischem Polyurethan-Schaum mit einem verringerten Wert für VOC, zur Herstellung von geruchsarmem viskoelastischen Polyurethan-Schaum, zur Verhinderung von Schrumpf bei der Herstellung von viskoelastischem Polyurethan-Schaum, zur Herstellung von viskoelastischem Polyurethan-Schaum mit besonders feiner Zellstruktur und/oder zur Bereitstellung lager- und hydrolysestabiler Aktivatorzusammensetzungen nach Anspruch 10.

## Claims

1. Use of bonded siloxane block polymers of the average general formula

$M_a\, M^1_b\, D_c\, D^1_d\, T_e\, Q_f\, G_g$ formula (I)

with

M = 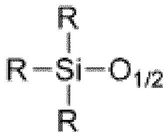 $M^1$ = 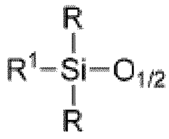 D = 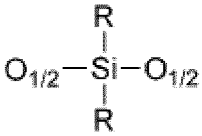

$D^1$ = 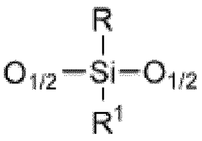 T = 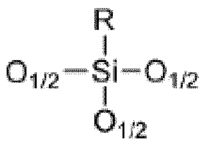 Q = 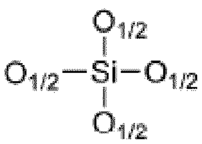

G = independently identical or different radicals from the group of:

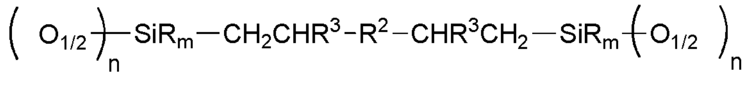,

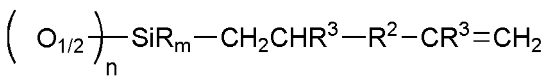

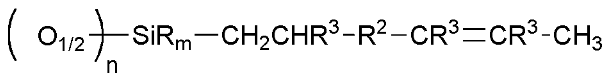

a = 0-20, preferably 0-10, especially 2.4-4.1,
b = 0-20, preferably 0-10, especially 0,
c = 3-450, preferably 5-350, especially 10-250,
d = 0-40, preferably 1-30, especially 1.5-20,
e = 0-20, preferably 0-10, especially 0,
f = 0-20, preferably 0-10, especially 0,
g = 0.1-3, preferably 0.15-2, especially 0.2-1.5,
where $a + b \geq 2$ and $N = a + b + c + d + e + f + g \geq 11$ and $\leq 500$, $b + d \geq 1$
R = independently identical or different alkyl radicals having 1-16 carbon atoms or aryl radicals having 6-16 carbon atoms or H or -OR3, preferably methyl, ethyl, phenyl, octyl, dodecyl or H, especially methyl,
$R^1$ = independently identical or different polyether radicals, preferably identical or different polyether radicals of the general formula (II)

$$-\left[CH_2\right]_h-O-\left[CH_2CH_2O\right]_i-\left[CH_2CH(CH_3)O\right]_j-\left[CH(CH_3)CH_2O\right]_k-\left[CR^4{}_2CR^4{}_2O\right]_l-R^5$$

formula (II)

$R^2$ = independently identical or different divalent organic radicals, preferably identical or different divalent organic radicals which have 2-30 carbon atoms and are optionally interrupted by ether functions or $(-SiR_2O-)_n$- groups and optionally bear OH functions,
$R^3$ = independently identical or different alkyl radicals having 1-16 carbon atoms or aryl radicals having 6-16 carbon atoms or H,
$R^4$ = identical or different alkyl radicals which have 1 to 18 carbon atoms and optionally have ether functions, or aryl radicals which have 6-18 carbon atoms and optionally have ether functions, or H, preferably H, ethyl and benzyl,
$R^5$ = identical or different radicals from the group of: $R^3$, H, $-C(O)R^3$, preferably methyl, butyl, H or -C(O)Me,
n = independently 1 or 2
m = independently 1 or 2
m + n = 3
h = 2-18, preferably 2-10, especially preferably 3,
i = 0-100, preferably 0-80, especially preferably 0-50,
j = 0-100, preferably 0-80, especially preferably 0-50,
k = 0-100, preferably 0-80, especially preferably 0-50,
l = 0-80, preferably 0-40, especially preferably 0,
with the proviso that $i + j + k + 1 \geq 3$,
as additive in the production of viscoelastic polyurethane foam using polyol mixtures and at least one isocyanate component,
wherein the polyol component used overall has an average hydroxyl number, determined to DIN 53240-1:2012-07, of 57-300 mg KOH/g, and wherein the PUR foam is produced at an isocyanate index of 65 to 108.

**2.** Use according to Claim 1, wherein the siloxane of the formula (I) functions as a cell opener.

**3.** Use according to either of Claims 1 and 2, wherein the siloxane of the formula (I) is employed in the form of an additive composition comprising 0% to 90% by weight, preferably 10% to 80% by weight, more preferably 20% to 70% by weight, of one or more inorganic or organic solvents, preferably selected from water, alcohols, especially polyether monools or polyether polyols, preferably consisting of H-functional starter substances onto which have been added, by means of alkoxylation, alkylene oxides (epoxides) having 2-24 carbon atoms, preferably ethylene oxide and/or propylene oxide, and which have a molecular weight of preferably 200-8000 g/mol, more preferably of 300-5000 g/mol, especially preferably of 500-1000 g/mol, and a PO content of preferably 10%-100% by weight, preferably of 50%-100% by weight, and polyester monools or polyester polyols having a molecular weight preferably in the range from 200 to 4500 g/mol, glycols, alkoxylates, carbonates, ethers, esters, branched or linear aliphatic or aromatic hydrocarbons and/or oils of synthetic and/or natural origin.

**4.** Use according to any of Claims 1 to 3, **characterized in that** the additive of the formula (I) is used in an amount of 0.001 to 10 parts by weight, especially 0.2 to 5 parts by weight, per 100 parts of polyol used overall.

**5.** Use according to any of Claims 1 to 4, **characterized in that** the PUR foam is produced using reactive amine and/or amine having a molar mass > 100 g/mol, preferably having a molar mass of > 160 g/mol, as catalyst.

**6.** Use according to any of Claims 1 to 5, **characterized in that** the PUR foam is produced using tolylene diisocyanate (TDI) and/or methylene diphenyl diisocyanate (MDI) and/or MDI-based isocyanates, preferably tolylene diisocyanate, especially using a mixture of 80% toluene 2,4-diisocyanate and 20% toluene 2,6-diisocyanate.

**7.** Use according to any of Claims 1 to 6, **characterized in that** at least a proportion of 5% by weight of the siloxane of the formula (I) used overall has a molar mass of > 50 000 g/mol, preferably > 60 000 g/mol, based on the siloxane of the formula (I) used overall.

**8.** Process for producing viscoelastic polyurethane foam by reacting polyol mixtures with at least one isocyanate

component in the presence of one or more catalysts which catalyse the isocyanate-polyol and/or isocyanate-water reactions and/or isocyanate trimerization, **characterized in that** the reaction is conducted in the presence of an additive of the formula (I), where the polyol component used overall has an average hydroxyl number, determined to DIN 53240-1:2012-07, of 57-300 mg KOH/g, and where the PUR foam is produced at an isocyanate index of 65 to 108.

**9.** Viscoelastic polyurethane foam produced by a process according to Claim 8.

**10.** Activator composition suitable for production of viscoelastic polyurethane foam, comprising polyol including at least one polyol having a hydroxyl number > 100 mg KOH/g, additive of formula (I), amine catalyst, optionally catalysts, excluding tin catalysts, where the polyol present overall has an average hydroxyl number, determined to DIN 53240-1:2012-07, of 57-300 mg KOH/g.

**11.** Composition for production of viscoelastic polyurethane foam, comprising polyol mixtures including at least one polyol having a hydroxyl number of > 100 mg KOH/g, di- or polyfunctional isocyanate, additive of formula (I), amine catalyst, metallic catalysts such as preferably potassium compounds, zinc compounds and/or tin compounds, stabilizer, blowing agent such as preferably water, optionally auxiliaries such as preferably physical blowing agents, flame retardants, antioxidants, UV stabilizers, colour pastes, biocides, fillers and/or crosslinkers,
where the polyol present overall has an average hydroxyl number, determined to DIN 53240-1:2012-07, of 57-300 mg KOH/g.

**12.** Composition according to Claim 11, comprising polyol in amounts of 25% to 80% by weight, water in amounts of 1% to 5% by weight, catalyst in amounts of 0.01% to 1% by weight, physical blowing agent in amounts of 0% to 50% by weight, stabilizers such as preferably Si-containing and non-Si-containing, especially Si-containing and non-Si-containing organic stabilizers and surfactants, in amounts up to 5% by weight, isocyanate in amounts of 20% to 60% by weight, and siloxane of formula (I) in amounts of 0.001% to 10% by weight, preferably 0.1% to 5% by weight.

**13.** Use of polyurethane foam according to Claim 9 as packaging foam, mattress, furniture cushioning, material in motor vehicle interiors, automobile seat cushioning, headrest, automobile interior trim, sound absorption material, shoe soles, carpet backing foam, filter foam, sponge, or for production of corresponding products, especially as material in motor vehicle interiors.

**14.** Use of additive of the formula (I), especially according to any of Claims 1 to 7, for production of viscoelastic polyurethane foam having a reduced VOC value, for production of low-odour viscoelastic polyurethane foam, for prevention of shrinkage in the production of viscoelastic polyurethane foam, for production of viscoelastic polyurethane foam having particularly fine cell structure and/or for provision of storage- and hydrolysis-stable activator compositions according to Claim 10.

## Revendications

**1.** Utilisation de polymères séquencés de siloxane reliés de la formule moyenne générale :

$$M_aM^1_bD_cD^1_dT_eQ_fG_g \qquad \text{Formule (I)}$$

avec

M = 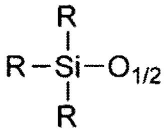

M¹ = 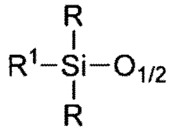

D = 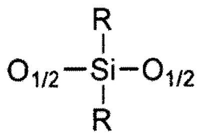

$D^1$ = 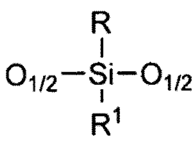 T = 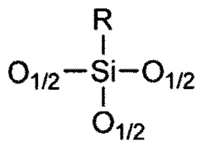 Q = 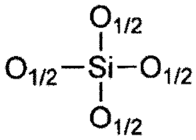

les G = indépendamment les uns des autres, des radicaux identiques ou différents du groupe constitué par :

$$\left(O_{1/2}\right)_n SiR_m - CH_2CHR^3 - R^2 - CHR^3CH_2 - SiR_m \left(O_{1/2}\right)_n ,$$

$$\left(O_{1/2}\right)_n SiR_m - CH_2CHR^3 - R^2 - CR^3{=}CH_2$$

$$\left(O_{1/2}\right)_n SiR_m - CH_2CHR^3 - R^2 - CR^3{=}CR^3 - CH_3$$

a = 0 à 20, de préférence 0 à 10, notamment 2,4 à 4,1,
b = 0 à 20, de préférence 0 à 10, notamment 0,
c = 3 à 450, de préférence 5 à 350, notamment 10 à 250,
d = 0 à 40, de préférence 1 à 30, notamment 1,5 à 20,
e = 0 à 20, de préférence 0 à 10, notamment 0,
f = 0 à 20, de préférence 0 à 10, notamment 0,
g = 0,1 à 3, de préférence 0,15 à 2, notamment 0,2 à 1,5, avec $a + b \geq 2$ et $N = a + b + c + d + e + f + g \geq 11$ et $\leq 500$, $b + d \geq 1$,
les R = indépendamment les uns des autres, des radicaux alkyle de 1 à 16 atomes de carbone ou des radicaux aryle de 6 à 16 atomes de carbone, identiques ou différents, ou H ou -OR3, de préférence méthyle, éthyle, phényle, octyle, dodécyle ou H, notamment méthyle,
les $R^1$ = indépendamment les uns des autres, des radicaux polyéther identiques ou différents, de préférence des radicaux polyéthers identiques ou différents de la formule générale (II) :

$$\left[CH_2\right]_h O \left[CH_2CH_2O\right]_i \left[CH_2CH(CH_3)O\right]_j \left[CH(CH_3)CH_2O\right]_k \left[CR^4{}_2CR^4{}_2O\right]_l R^5$$

Formule (II)

les $R^2$ = indépendamment les uns des autres, des radicaux organiques bivalents identiques ou différents, de préférence des radicaux organiques bivalents identiques ou différents de 2 à 30 atomes de carbone, qui sont éventuellement interrompus par des fonctions éther ou des groupes $(-SiR_2O-)_n$ et portent éventuellement des fonctions OH,
les $R^3$ = indépendamment les uns des autres, des radicaux alkyle identiques ou différents de 1 à 16 atomes de carbone ou des radicaux aryle de 6 à 16 atomes de carbone ou H,
les $R^4$ = des radicaux alkyle identiques ou différents de 1 à 18 atomes de carbone, qui comprennent éventuellement des fonctions éther, ou des radicaux aryle de 6 à 18 atomes de carbone, qui comprennent éventuellement des fonctions éther, ou H, de préférence H, éthyle et benzyle,
les $R^5$ = des radicaux identiques ou différents du groupe constitué par : $R^3$, H, $-C(O)R^3$, de préférence méthyle,

butyle, H ou -C(O)Me,
les n = indépendamment les uns des autres, 1 ou 2,
les m = indépendamment les uns des autres, 1 ou 2,
m + n = 3,
h = 2 à 18, de préférence 2 à 10, de manière particulièrement préférée 3,
i = 0 à 100, de préférence 0 à 80, de manière particulièrement préférée 0 à 50,
j = 0 à 100, de préférence 0 à 80, de manière particulièrement préférée 0 à 50,
k = 0 à 100, de préférence 0 à 80, de manière particulièrement préférée 0 à 50,
l = 0 à 80, de préférence 0 à 40, de manière particulièrement préférée 0,
à condition que $i + j + k + l \geq 3$,
en tant qu'additif lors de la fabrication d'une mousse de polyuréthane viscoélastique en utilisant des mélanges de polyols et au moins un composant isocyanate,
le composant polyol utilisé au total présentant un indice hydroxyle moyen, déterminé selon DIN 53240-1:2012-07, de 57 à 300 mg de KOH/g, et la fabrication de la mousse de PUR ayant lieu à un indice isocyanate de 65 à 108.

**2.** Utilisation selon la revendication 1, dans laquelle le siloxane selon la formule (I) fonctionne en tant qu'agent d'ouverture cellulaire.

**3.** Utilisation selon l'une quelconque des revendications 1 ou 2, dans laquelle le siloxane selon la formule (I) est utilisé sous la forme d'une composition d'additif, comprenant 0 à 90 % en poids, de préférence 10 à 80 % en poids, de manière particulièrement préférée 20 à 70 % en poids, d'un ou de plusieurs solvants inorganiques ou organiques, de préférence choisis parmi l'eau, les alcools, notamment les polyéther-monools ou -polyols, de préférence constituée par des substances de départ à fonction H, sur lesquelles des oxydes d'alkylène (époxydes) de 2 à 24 atomes de carbone, de préférence de l'oxyde d'éthylène et/ou de l'oxyde de propylène, ont été additionnés par alcoxylation, et qui présentent un poids moléculaire de préférence de 200 à 8 000 g/mol, de préférence de 300 à 5 000 g/mol, de manière particulièrement préférée de 500 à 1 000 g/mol, et une teneur en PO de préférence de 10 à 100 % en poids, de préférence de 50 à 100 % en poids, ainsi que des polyester-monools ou -polyols ayant un poids moléculaire de préférence dans la plage allant de 200 à 4 500 g/mol, des glycols, des alcoxylates, des carbonates, des éthers, des esters, des hydrocarbures aliphatiques ou aromatiques ramifiés ou linéaires et/ou des huiles d'origine synthétique et/ou naturelle.

**4.** Utilisation selon l'une quelconque des revendications 1 à 3, **caractérisée en ce que** l'additif de la formule (I) est utilisé en une quantité de 0,001 à 10 parties en poids, notamment de 0,2 à 5 parties en poids, pour 100 parties du polyol utilisé au total.

**5.** Utilisation selon l'une quelconque des revendications 1 à 4, **caractérisée en ce que** la fabrication de la mousse de PUR a lieu en utilisant une amine réactive et/ou une amine ayant une masse molaire > 100 g/mol, de préférence ayant une masse molaire > 160 g/mol, en tant que catalyseur.

**6.** Utilisation selon l'une quelconque des revendications 1 à 5, **caractérisée en ce que** la fabrication de la mousse de PUR a lieu en utilisant du diisocyanate de toluylène (TDI) et/ou du diisocyanate de diphénylméthylène (MDI) et/ou des isocyanates à base de MDI, de préférence du diisocyanate de toluylène, notamment en utilisant un mélange de 80 % de 2,4-diisocyanate de toluène et 20 % de 2,6-diisocyanate de toluène.

**7.** Utilisation selon l'une quelconque des revendications 1 à 6, **caractérisée en ce que** le siloxane de la formule (I) utilisé au total présente au moins en une proportion de 5 % en poids une masse molaire > 50 000 g/mol, de préférence > 60 000 g/mol, % en poids par rapport au siloxane de la formule (I) utilisé au total.

**8.** Procédé de fabrication d'une mousse de polyuréthane viscoélastique par mise en réaction de mélanges de polyols avec au moins un composant isocyanate en présence d'un ou de plusieurs catalyseurs, qui catalysent les réactions isocyanate-polyol et/ou isocyanate-eau et/ou la trimérisation d'isocyanates, **caractérisé en ce que** la réaction est réalisée en présence d'un additif de la formule (I), le composant polyol utilisé au total présentant un indice hydroxyle moyen, déterminé selon DIN 53240-1:2012-07, de 57 à 300 mg de KOH/g, et la fabrication de la mousse de PUR ayant lieu à un indice isocyanate de 65 à 108.

**9.** Mousse de polyuréthane viscoélastique, fabriquée par un procédé selon la revendication 8.

**10.** Composition d'activateur, destinée à la fabrication d'une mousse de polyuréthane viscoélastique, comprenant un

polyol, contenant au moins un polyol ayant un indice hydroxyle > 100 mg de KOH/g, un additif selon la formule (I), un catalyseur aminé, éventuellement des catalyseurs, les catalyseurs contenant de l'étain étant exclus, le polyol contenu au total présentant un indice hydroxyle moyen, déterminé selon DIN 53240-1:2012-07, de 57 à 300 mg de KOH/g.

**11.** Composition destinée à la fabrication d'une mousse de polyuréthane viscoélastique, comprenant des mélanges de polyols, contenant au moins un polyol ayant un indice hydroxyle > 100 mg de KOH/g, un isocyanate di- ou polyfonctionnel, un additif selon la formule (I), un catalyseur aminé, des catalyseurs contenant des métaux, tels que de préférence des composés contenant du potassium, du zinc et/ou de l'étain, un stabilisateur, un agent moussant, tel que de préférence de l'eau, éventuellement des adjuvants, tels que de préférence des agents gonflants physiques, des retardateurs de flamme, des antioxydants, des stabilisateurs UV, des pâtes de couleur, des biocides, des charges et/ou des agents de réticulation,
le polyol contenu au total présentant un indice hydroxyle moyen, déterminé selon DIN 53240-1:2012-07, de 57 à 300 mg de KOH/g.

**12.** Composition selon la revendication 11, comprenant du polyol en quantités de 25 à 80 % en poids, de l'eau en quantités de 1 à 5 % en poids, un catalyseur en quantités de 0,01 à 1 % en poids, un agent gonflant physique en quantités de 0 à 50 % en poids, des stabilisateurs, tels que de préférence des stabilisateurs et des tensioactifs contenant du Si et ne contenant pas de Si, notamment des stabilisateurs et des tensioactifs organiques contenant du Si et ne contenant pas de Si, en quantités de jusqu'à 5 % en poids, un isocyanate en quantités de 20 à 60 % en poids, ainsi qu'un siloxane selon la formule (I) en quantités de 0,001 à 10 % en poids, de préférence de 0,1 à 5 % en poids.

**13.** Utilisation d'une mousse de polyuréthane selon la revendication 9 en tant que mousse d'emballage, matelas, rembourrage de meuble, matériau dans les espaces intérieurs de véhicules automobiles, rembourrage de siège automobile, appui-tête, habillage intérieur d'automobile, matériau d'absorption acoustique, semelle de chaussure, mousse pour le côté arrière de tapis, mousse de filtration, éponge, ou pour la fabrication de produits correspondants, notamment en tant que matériau les espaces intérieurs de véhicules automobiles.

**14.** Utilisation d'un additif de la formule (I) selon l'une quelconque des revendications 1 à 7 pour la fabrication d'une mousse de polyuréthane viscoélastique présentant une valeur réduite pour les COV, pour la fabrication d'une mousse de polyuréthane viscoélastique de faible odeur, pour empêcher le retrait lors de la fabrication d'une mousse de polyuréthane viscoélastique, pour la fabrication d'une mousse de polyuréthane viscoélastique présentant une structure cellulaire particulièrement fine et/ou pour la préparation de compositions d'activateur stables au stockage et à l'hydrolyse selon la revendication 10.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2007146351 A
- US 20040254256 A
- EP 1240228 A
- US 3836560 A
- DE 102006061351 A1
- US 6730749 B1
- WO 2009035563 A
- EP 2182020 A
- EP 1520870 A
- DE 19859759 C1
- EP 0493836 A1
- US 5565194 A
- EP 1350804 A
- EP 1095968 A
- WO 0158976 A1
- WO 2005063841 A1
- WO 0222702 A1
- WO 2006055396 A1
- WO 03029320 A1
- US 6924321 B2
- US 6762274 B2
- EP 2104696 B1
- WO 2004060956 A1
- WO 2013102053 A1
- EP 0380993 A
- US 3346557 A


### In der Beschreibung aufgeführte Nicht-Patentliteratur


- **WALTER NOLL.** Chemie und Technologie der Silicone. Verlag Chemie GmbH, 1968
- Polyurethane. Kunststoff-Handbuch. Carl-Hanser-Verlag, 1966, vol. 7
- Polyurethane. Kunststoff-Handbuch. Carl-Hanser-Verlag, 1983, vol. 7
- Polyurethane. Kunststoff-Handbuch. Carl-Hanser-Verlag, 1993, vol. 7